# EUROPEAN PATENT APPLICATION

(11) **EP 0 597 500 A2**
(43) Date of publication of application: **18.05.1994**
(21) Application number: 93118398.2
(22) Date of filing: 12.11.1993
(51) Int. Cl.: G09B 29/10, G01C 21/22

(54) **Map display apparatus operating with a printed map and map sheet used for the same**

(30) Priority: 13.11.1992 JP 328851/92; 03.02.1993 JP 15820/93; 05.02.1993 JP 18688/93; 26.03.1993 JP 68029/93; 25.06.1993 JP 154729/93; 09.07.1993 JP 169970/93; 13.07.1993 JP 172946/93
(71) Applicant: DAI NIPPON PRINTING CO., LTD., Tokyo 162 (JP)
(72) Inventor: Seriguchi, Shuji, Kasukabe-shi, Saitama 344 (JP); Satoh, Toshikazu, Hino-shi, Tokyo 191 (JP); Kunugi, Tadashi, Iruma-gun, Saitama 354 (JP)
(74) Representative: Grünecker, Kinkeldey, Stockmair & Schwanhäusser Anwaltssozietät

(57) **Abstract**

A map display apparatus (10) operating with a map sheet (20, 40, 72, 80, 130) that is a base material on which a map is printed. The apparatus (10) includes a locating device (12) for detecting the user's present position to produce positional information, a map information display device (16) for displaying the map sheet and indicating positions, and a display controller (11) for marking the present location on the map information display device (16) based on the positional information provided by the locating device (12).

## Description

The present invention relates to a portable map display apparatus, and particularly to a map display apparatus operating with a map printed on a base material and to a map sheet used for the apparatus.

A conventional map display apparatus used as a navigation system is designed to fetch an intended map from the map information storage medium in response to information such as the name of place inputted by the user on the operation panel and display the map on the display device, as described in Japanese patent unexamined publication JP-A-4-98287.

However, although the above-mentioned conventional apparatus has an advantage of fast access to the intended map owing to the use of a CD-ROM or IC card for the map storage medium, the performance is dependent on the memory capacity. As a result, the conventional apparatus is limited in the resolution and color of display and is expensive by being based on the costly map storage medium and display device.

The present invention is intended to overcome the foregoing prior art problems.

A first object of this invention is to provide a map display apparatus that is superior in operational repeatability, inexpensive and capable of indicating the present location on an intelligible map displayed in arbitrary number of colors.

A second object of this invention is to provide a map display apparatus based on a head-up display scheme that is superior in the operational repeatability, inexpensive and capable of indicating the present location on an intelligible map displayed by being magnified in arbitrary number of colors.

A third object of this invention is to provide a map display apparatus that is capable of enabling the user to watch on the display screen that the present location is right on the scheduled course between the departure (starting) point and the destination.

A fourth object of this invention is to provide a map display apparatus that is capable of functioning as a navigation system by even using an ordinary road map book as a map information medium from which a map is fetched and displayed on the display device.

A fifth object of this invention is to provide a map display apparatus that is superior in the portability, inexpensive and capable of indicating the present location on an intelligible map displayed in arbitrary number of colors.

A sixth object of this invention is to provide a map sheet that enables the map display apparatus to fetch necessary map information from it by being merely placed at the specified position of the apparatus.

The above-mentioned first objective is achieved based on the following several solving means, in which equivalent parts are referred to by the common symbols for the sake of easy understanding.

A first solving means is a map display apparatus that operates with a map means (20) printed on a base material, the apparatus comprising a locating means (12) for detecting the user's present location to produce positional information, a map information display means (16) for displaying a map based on the map means and indicating the present location on it, and a display control means (11) for displaying the present location on the map information display means.

A second solving means is a map display apparatus that is based on the first solving means added by an information recording medium on which information pertinent to the map means (20) is recorded, and an information reading means (13A, 13B) for reading map-related information out of the information recording means.

A third solving means is a map display apparatus that is based on the second solving means added by an information writing means (13A) for writing, in the information recording means, at least one destination or a route to it, and a display control means (11) for displaying information about the deviation of the present location detected by the locating means from the destination or route read out of the information recording medium.

The inventive map display apparatus implements the illumination and indication of positions from behind the printed map information on a transparent map sheet, for example. Accordingly, the simple apparatus without using a capacious information storage medium can provide intelligible map information for the user.

In addition, the locating means measures the present position and indicates it on the displayed map, enabling the user to easily locate oneself on the map.

In addition, the apparatus records the destination or route to it on the information recording medium and displays information about the deviation of the present location detected by the locating means from the destination, and in can be used as a portable navigation system.

The above-mentioned first objective is also achieved by the map display apparatus comprising a liquid crystal display device for displaying map information and positional information, a transparent map sheet that is a transparent base material, on which a map is printed, disposed behind the liquid crystal display device, a detachable reflection plate or semi-transparent reflection plate disposed behind the transparent map sheet, an illumination means for illuminating the semi-transparent reflection plate from behind it, a locating means for detecting the present user's position to produce positional information, and a display control means for indicating the present location on the liquid crystal display device by using an associated shutter device based on the positional information provided by the locating means.

The above-mentioned first objective is also achieved by the map display apparatus comprising a liquid crystal display device for displaying map information and positional information, a reflective map sheet that is a sheet of paper or an opaque reflective base material, on which a map is printed, disposed behind the liquid crystal display device, an illumination means for illuminating the map sheet from the front, a locating means for detecting the present location to produce positional information, and a display control means for indicating the present user's position on the liquid crystal display device by using an associated shutter device based on the positional information provided by the locating means.

The inventive map display apparatus is designed to place a reflective map sheet that is a printed map on a reflective sheet behind the liquid crystal display device. Since the map sheet is a printed matter, it provides high-quality map information without relying on a large memory capacity, and it can be displayed on the liquid crystal display device without using a large-power illumination light owing to the reflective sheet.

The apparatus indicates the present location, which is obtained from positional information provided by the locating means that is based on the Global Positioning System (GPS) or the like, on the liquid crystal display device by using a shutter device so that the display device presents an overlap display of map information and positional information, and it can be used as a navigation system.

The inventive map display apparatus is designed to place a transparent map sheet that is a printed map on a transparent sheet behind the liquid crystal display device, with a detachable reflective or semi-transparent reflective plate being disposed behind the transparent map sheet. Consequently, the apparatus can operate at a low power consumption when the reflective plate is attached, or it can operate with the semi-transparent reflective plate in a transmission or reflection mode depending on the presence or absence of the rearside illumination.

The inventive map display apparatus is designed to place an opaque map sheet that is a printed map on an opaque plate and illuminate it from the front. Consequently, the map can be viewed clearly through the liquid crystal display device even though the map sheet base material is made of a material with a low reflectivity, such as paper, and the range of choice of the base material can be expanded.

Any of the foregoing inventive map display apparatus can be used as a portable navigation system by storing a destination or a route to it on a storage medium and displaying information about the deviation of the present location detected by the locating means from the destination.

The above-mentioned second objective is achieved by the map display apparatus that bases the operation on a film map on a base material. The apparatus comprises a liquid crystal display device disposed to confront the film map, a projection means for projecting positional information displayed on the display device and map information recorded on the film map in overlap fashion, a holography system for focusing the positional information and map information projected by the projection means in the space, a locating means for detecting the present location to produce positional information, and a display control means for indicating the present location on the display device based on the positional information provided by the locating means such that the present location coincides with the relevant position on the film map.

The inventive apparatus is designed to project the positional information displayed by the liquid crystal display device and the map information recorded on the film map in overlap fashion in the space by the projection means and indicate the detected present location so that it coincides with the relevant position on the film map. Consequently it is possible for the inventive apparatus to enlarge the map information at arbitrary magnification factor based on the principle of liquid crystal projector and indicate the present location on a virtual screen so that it coincides with the map information.

The inventive apparatus displays a magnified image of map information of the film map on the virtual screen so that the user can view it, enabling the creation of a high-quality map image without the influence of the resolution of display device and by use of a film map on which map information is recorded in a reduced size, whereby the room needed to store film maps can be reduced.

Film maps can be produced by printing, and high-quality map information can be obtained without relying on a large memory capacity. In addition, map information can be recorded in a drastically reduced size through the numerous-line printing process.

In the offset printing, the number of lines of mesh points (the number of mesh points per inch) is usually 175, and the improvement of accuracy of the plate forming and printing machines has enabled such numerous-line printing as of 300 to 900 lines. For example, a film map printed in a 900-line mode includes a number of mesh points (quantity of information) about 25 times as much as a print produced in a 175-line mode, and accordingly a print in 1/5 size reduction enlarged by five times will have the same quantity of information as a film map printed in a 175-line mode.

In this case, it is sufficient to prepare a map of a 1/5 size with respect to the projected map on the screen, allowing the use of a microfilm or micro- fiche, whereby the room needed to store film maps can be reduced and the scale factor of a displayed map can be changed by varying the magnification factor.

In case the map display apparatus is installed on a vehicle, it is possible to form a screen in the space outside of the windshield through the provision of a hologram on the windshield, and this arrangement is advantageous for the reduction of the apparatus installation room.

By detecting the present location based on a locating means that detects the present user's location and produces positional information, e.g., GPS equipment, and indicating the position on the liquid crystal display device, it is possible to project the present location over the map information and present a display on a virtual screen. Consequently, it becomes possible to use the map display apparatus as a navigation system that is superior in operational repeatability, inexpensive and convenient for the portable use.

In the case of the provision of a memory means for storing at least one destination or route to it corresponding to map information on a film map and a means of displaying information about the deviation of the present location detected by the locating means from the destination or route read out of the memory means on the liquid crystal display device, it is possible for the inventive apparatus to implement the route guide function of a navigation system, i.e., leading the vehicle to the destination by presenting a display of scheduled course.

In the case of the provision of a map moving means for moving a film map in two-dimensional directions, it is possible for the inventive apparatus to display map information of a large area on a virtual screen by merely using a film map (map sheet) on which map information of the large area is recorded. In this case, by moving the film map in response to the movement of the vehicle, it becomes possible to implement the wide-range navigation based on a single map sheet. The user can access to map information of any of areas that are printed by being reduced in size in a matrix array on a single sheet.

In the case of the provision of a map moving means for moving an elongated film map in the longitudinal direction and a film map supply and take-up means, it is possible for the inventive apparatus to display map information of a very large area continuously by moving the film map in the longitudinal direction, and it becomes possible to implement the wide range navigation and reduce the room needed to store film maps more drastically.

The above-mentioned third objective is achieved by the map display apparatus which operates by displaying a map sheet, which has map information recorded on a base material, on the display device. The apparatus comprises a locating means for detecting the present user's location to produce positional information, a display control means for indicating the present location on the display device based on the positional information provided by the locating means such that the present location coincides with the relevant position on the map, a means of inputting a starting point, destination and one or more scheduled passage points on the scheduled course between the starting point and destination on the map sheet on the display device, and a means of displaying line segments that connect contiguous ones of the points sequentially and heading marks on the positions.

The apparatus is designed to indicate the present location detected by the locating means at the relevant position on the map of the map sheet overlaid on the display device and display the scheduled course in the form of line segments and arrows along the starting point, destination and passage points that have been inputted by the user. Consequently, it is possible for the user who has departed from the starting point to compare the present location with the scheduled course thereby to confirm visually that the present location is on the course to the destination.

In the case of the provision of the function of calculating, at the arrival at a scheduled passage point, the distance from the passage point to the destination on the scheduled course and displaying the calculated distance on the display device, the inventive apparatus can readily calculate the expected time that will be expended before the arrival at the destination.

The above-mentioned fourth objective is achieved by the map display apparatus which comprises a liquid crystal display device that is flexible enough to be overlaid on a map, a correlation calculation means for calculating the correlation between the latitude and longitude on the map and the coordinates on the display screen, a locating means for detecting the present user's position to produce positional information, and a display control means for indicating the present location on the display device based on the positional information provided by the locating means such that the present location coincides with the relevant position on the map.

The inventive apparatus has its liquid crystal display device formed of a flexible material such as a film so that it can be placed on a page of a map book that may not have a flat surface, and is designed to calculate the correlation between the latitude and longitude on the map and the coordinates on the display screen so as to indicate the present location detected by the locating means at the relevant position on the map. Consequently, the map display apparatus can readily function as an inexpensive navigation system.

In case the correlation calculation means has a function of calculating the correlation between the latitude and longitude on the map and the coordinates on the display screen based on the latitudes and longitudes of two reference points on the map, it is possible for the inventive apparatus to evaluate accurately the correlation between the map and the display screen overlaid on the map and it becomes possible to establish a positional matching between them.

In case the correlation calculation means has a function of calculating the correlation between the latitude and longitude on the map and the coordinates on the display screen based on the latitude and longitude of a reference point on the map, the scale factor and bearing of the map, it is possible for the inventive apparatus to evaluate accurately the correlation between the map and the display screen overlaid on the map.

In case the correlation calculation means has a function of calculating the correlation between the latitude and longitude of the present location detected by the locating means, the scale factor and bearing of the map, it is possible for the inventive apparatus to evaluate accurately the correlation between the map and the display screen overlaid on the map.

The above-mentioned fifth objective is achieved by the map display apparatus which comprises a liquid crystal display device that is flexible enough to be overlaid on a map, a display casing in which the liquid crystal display device can be housed, and a locating means for detecting the present user's location to produce positional information, and a display control means for indicating the present location on the display device based on the positional information provided by the locating means such that the present location coincides with the relevant position on the map.

The inventive apparatus is designed to have a flexible liquid crystal display device so that it can be housed in the casing, and indicate the present location detected by the locating means at the relevant position on the display screen which is drawn out of the casing and overlaid on the map sheet of printed map information. Consequently, the map display apparatus can readily function as an inexpensive navigation system that is capable of displaying intelligible map information on the display screen, and moreover the apparatus is easily portable by housing the display device in the casing when it is not used.

In case the display casing is equipped with a winding means, it is possible to house the liquid crystal display device very easily.

In case the display casing is equipped with a screen support means, it is possible to support and fix the flexible liquid crystal display device firmly after it has been drawn out of the casing, allowing the user to operate the apparatus stably.

In the case of the provision of a correlation calculation means for calculating the correlation between the latitude and longitude on the map and the coordinates on the display screen that is overlaid on the map sheet, it is possible for the inventive apparatus to make the positional information, such as the present location displayed on the display screen, accurately consistent with the map information (map) recorded on the map sheet.

The above-mentioned fourth and fifth objectives are achieved by the map display apparatus which consists of a liquid crystal display device that is overlaid on a map and a separate control unit, which comprises a locating means for detecting the present user's position to produce positional information and a display control means for indicating the present location on the display device based on the positional information provided by the locating means such that the present location coincides with the relevant position on the display screen in correspondence to the present position on the map.

The inventive apparatus is designed to have a thin display device (with a thickness of about 0.5 mm in case of a liquid crystal film type and 0.5 mm in case of a glass plate type) separately from the control unit so that it can easily be overlaid on a map. The present location detected by the locating means is indicated at the relevant position on the display screen in correspondence to the present location on the map. Consequently, the map display apparatus can readily function as an inexpensive navigation system that is capable of displaying intelligible map information on the display screen without relying on a large memory capacity.

This map display apparatus has its display device separated from the control unit which performs display control for indicating the present location on the display device, allowing the user to place it between pages of a closed map book when the apparatus is not used and carry the apparatus easily as if the user is simply carrying a map book.

In the case of the provision of a hand-held bar-code reader connected to the control unit, it is possible for the inventive apparatus to read map information recorded on a map sheet in the form of bar code including data of the map range, latitude and longitude on the map and the scale factor of the map, and feed the data easily to the control unit, allowing the user to establish a positional matching between the map positions and the coordinates on the display screen. The hand-held bar-code reader enables the user to read bar codes easily regardless of the type of map (sheet or book) and the location of bar codes on the map.

In the case of the provision of a hook device on the control unit, it becomes possible for the user to carry the inventive map display apparatus very easily to arbitrary places by attaching the control unit to the user's waist belt or a map book.

In the case of the application of weak adhesive on the entire or partial rear surface of the liquid crystal display device, it becomes possible for the user to fix the display device on a map by overlaying the display device on the map in a proper positional relation. The weak adhesive allows the user to detach the display device from the map without any damage to the map surface, and the adhesive works repeatedly.

In the case of the provision of a sheet member disposed at the back of the liquid crystal display device so as to form a casing between them, it is possible for the user to set part of a map sheet or map book in it easily in a proper positional relation between the display screen and the map.

In the case of the provision of magnets on the entire or partial surface of the liquid crystal display device, with a magnetic sheet being placed on the back of a map, it is possible for the user to fix the display device on the map by overlaying the display device on it in a proper positional relation by utilization of the magnetic force acting between these members. The display device can be detached easily from the map.

The above-mentioned sixth objective is achieved by the map sheet that is map information printed on a base material and is provided with a digital information recording means for recording map-related information.

The inventive map sheet has a digital information record means for recording map-related information, allowing the user to fetch map-related information specific to the map into the apparatus by mounting the map sheet at the specified position of the apparatus. Consequently, it is possible for the user to provide an intended function, e.g., navigation function, for the map display apparatus.

In the case of the digital information record means in the form of bar code, it is advantageous in that a bar code can be printed directly on the map sheet and easy to make. For two-dimensional bar codes, an increased record capacity is added to the above-mentioned advantage of printing, and for micro bar codes, the record capacity can further be increased.

In the case of the digital information record means formed of an IC memory chip, it is possible for the user to store and write a great deal of information in it, or in the case of an optical storage medium, an increased amount of information can be recorded.

The preferred embodiments will be described with reference to the drawings, wherein like elements have been denoted throughout the figures with like reference numerals, and wherein:
Fig. 1 is a perspective diagram of the map display apparatus based on the first embodiment of this invention;
Fig. 2 is a block diagram of the apparatus of the first embodiment;
Fig. 3 is a cross-sectional diagram showing the map information display device of the first embodiment;
Fig. 4 is a plan view of an example of the map sheet used for the first embodiment;
Fig. 5 is a flowchart explaining the overall operation of the first embodiment;
Fig. 6 is a flowchart explaining the operation in the navigation mode of the first embodiment;
Fig. 7 is a brief plan view of another example of the map sheet based on this invention;
Fig. 8 is a magnified plan view of part of the map sheet shown in Fig. 7;
Fig. 9 is a brief plan view of still another example of the map sheet based on this invention;
Fig. 10 is a brief cross-sectional diagram of the map sheet shown in Fig. 9;
Fig. 11 is a brief plan view of still another example of the map sheet based on this invention;
Fig. 12 is a magnified plan view of part of the map sheet shown in Fig. 11;
Fig. 13 is a brief cross-sectional diagram showing a modified map information display device;
Fig. 14 is a brief cross-sectional diagram showing another modified map information display device;
Fig. 15 is an external perspective diagram of the map display apparatus based on the second embodiment of this invention;
Fig. 16 is a perspective diagram of the map display apparatus based on the third embodiment of this invention;
Fig. 17 is a brief cross-sectional diagram of the third embodiment;
Fig. 18 is a brief plan view of a reflective map sheet used for the third embodiment;
Fig. 19 is a magnified cross-sectional diagram showing part of the map sheet shown in Fig. 18;
Fig. 20 is a set of diagrams explaining the manner of storage of map sheets;
Fig. 21 is a block diagram showing the functional blocks of the third embodiment;
Fig. 22 is a brief cross-sectional diagram of the apparatus based on the fourth embodiment of this invention;
Fig. 23 is a brief cross-sectional diagram of the apparatus based on the fifth embodiment of this invention;
Fig. 24 is a brief perspective diagram showing the arrangement of the map display apparatus based on the sixth embodiment of this invention;
Fig. 25 is a block diagram showing the functional blocks of the sixth embodiment;
Fig. 26 is a brief perspective diagram showing the exterior of the map display apparatus of the sixth embodiment;
Fig. 27 is a brief perspective diagram of the arrangement of the map display apparatus based on the seventh embodiment of this invention;
Fig. 28 is a brief perspective diagram of the map display apparatus based on the eighth embodiment of this invention;
Fig. 29 is a brief cross-sectional diagram of the eighth embodiment;
Fig. 30 is a brief perspective diagram of the map display apparatus of the eighth embodiment, with its display screen being open;
Fig. 31 is a brief plan view of the map sheet used for the eighth embodiment;
Fig. 32 is a flowchart explaining the operation of the eighth embodiment;
Fig. 33 is a diagram used to explain the manner of entry of a departure point;
Fig. 34 is a diagram used to explain the manner of display of the heading mark on the departure point;
Fig. 35 is a diagram showing a display of a scheduled course between two points;
Fig. 36 is a diagram showing a display of a scheduled course from a departure point to a destination;
Fig. 37 is a diagram showing a display of a scheduled return course;
Fig. 38 is a flowchart used to explain the manner of entry of a scheduled course that involves more than one map sheet;
Fig. 39 is a conceptual diagram of a scheduled course that involves more than one map sheet;
Fig. 40 is a diagram explaining an example of the usage of the map sheet;
Fig. 41 is a brief perspective diagram of the map display apparatus based on the ninth embodiment of this invention;
Fig. 42 is a block diagram showing the functional blocks of the ninth embodiment;
Fig. 43 is a flowchart explaining the operation of the ninth embodiment;
Fig. 44 is another flowchart explaining the operation of the ninth embodiment;
Fig. 45 is a plan view of the map used for the ninth embodiment;
Fig. 46 is a diagram explaining the operation of the ninth embodiment;
Fig. 47 is a flowchart of the operation based on the tenth embodiment;
Fig. 48 is a flowchart of the operation based on the eleventh embodiment;
Fig. 49 is a flowchart of the operation based on the twelfth embodiment;
Fig. 50 is a flowchart of the operation based on the thirteenth embodiment;
Fig. 51 is a brief plan view of the map display apparatus in a state of use based on the fourteenth embodiment of this invention;
Fig. 52 is a brief plan view derived from Fig.51, with the display device being not shown;
Fig. 53 is a conceptual cross-sectional diagram explaining the structure of the display device of the fourteenth embodiment;
Fig. 54 is a diagram showing the display device wind mechanism of the fourteenth embodiment;
Fig. 55 is a brief perspective diagram of the map display apparatus in a state of use based on the fifteenth embodiment of this invention;
Fig. 56 is a brief elevation view of the display device of the fifteenth embodiment overlaid on a map book;
Fig. 57 is a brief perspective diagram showing the back of the control unit of the fifteenth embodiment;
Fig. 58 is a diagram explaining the manner of position setting of the present location based on the fifteenth embodiment;
Fig. 59 is a brief elevation view of the display device based on the sixteenth embodiment of this invention;
Fig. 60 is a brief elevation view of the display device based on the seventeenth embodiment of this invention;
Fig. 61 is a brief elevation view of the display device based on the eighteenth embodiment of this invention;
Fig. 62 is a brief perspective diagram of the map display apparatus in a state of use based on the nineteenth embodiment of this invention; and
Fig. 63 is a diagram explaining the manner of position setting of the present location based on the nineteenth embodiment.

Embodiments of this invention will be described in detail with reference to the drawings. Throughout the figures, like items are referred to by the common numerals and symbols.

### [Embodiment 1 ]

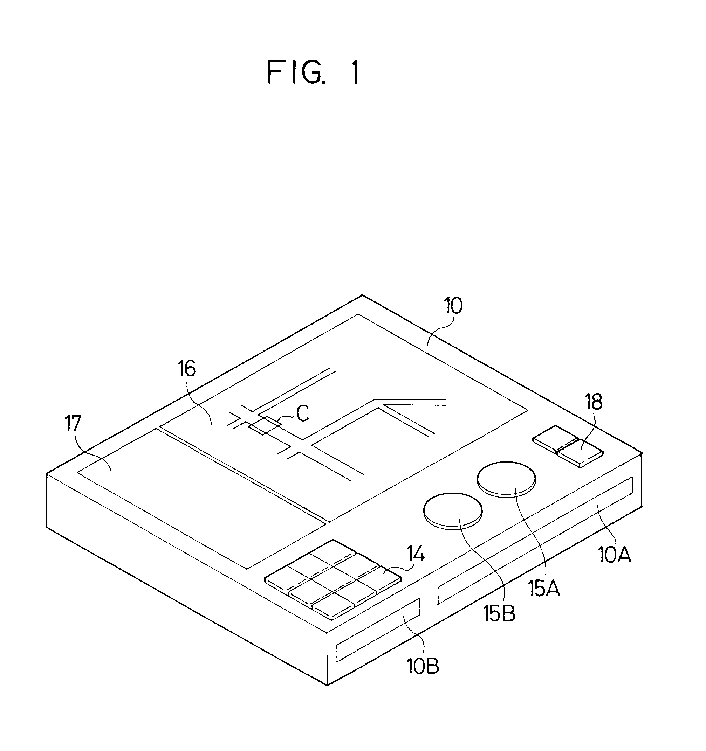

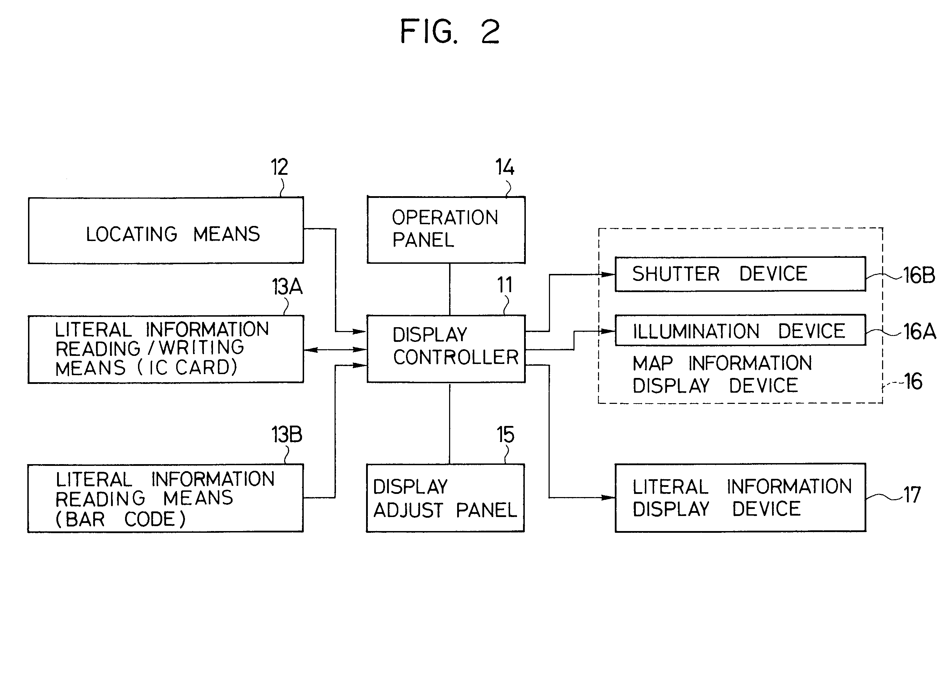

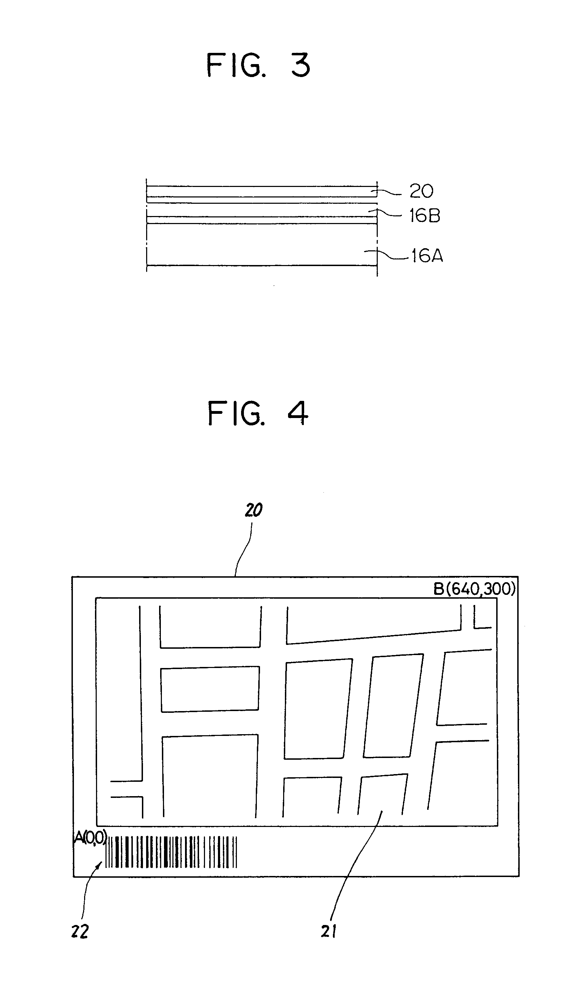

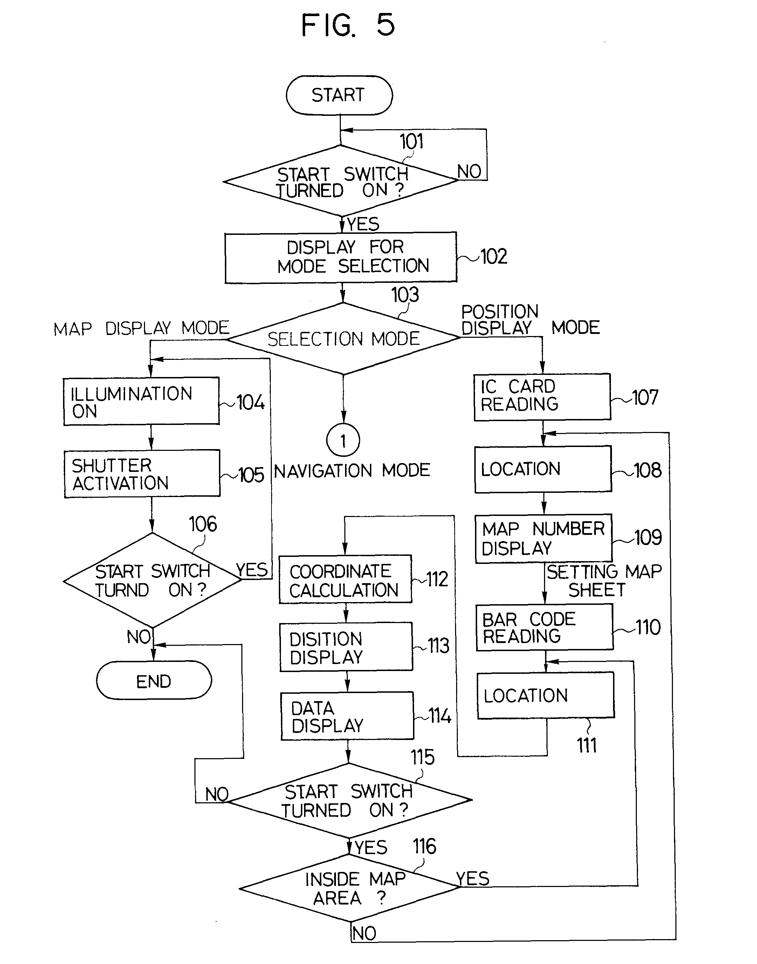

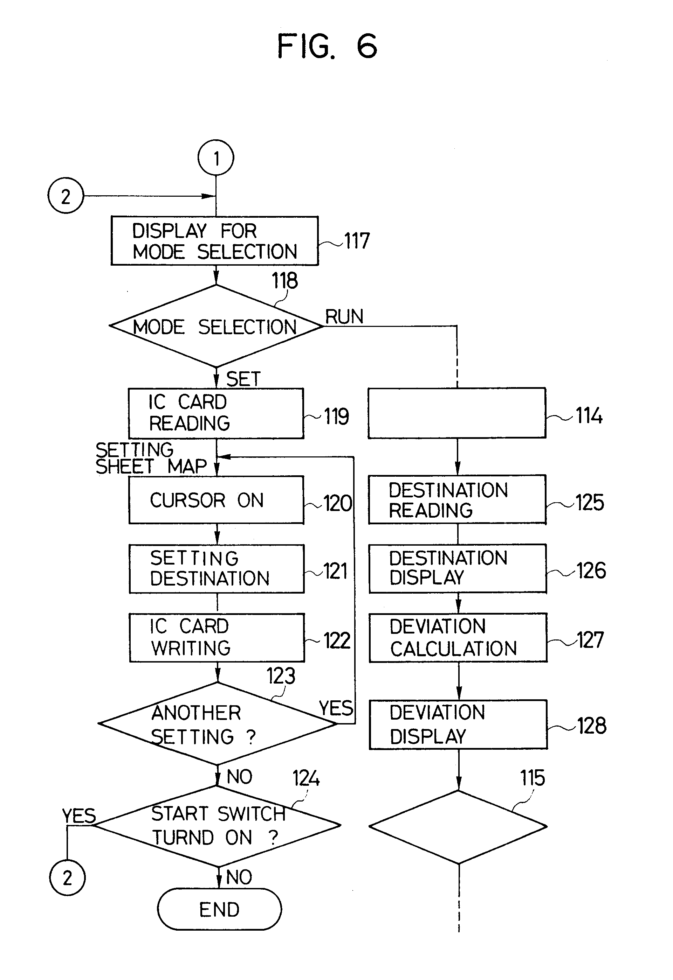

Fig. 1 through Fig.6 are diagrams showing the map display apparatus based on the first embodiment of this invention, of which Fig. 1 is a perspective diagram of the apparatus, Fig. 2 is a block diagram of the apparatus, Fig. 3 is a cross-sectional diagram of the map display device, Fig. 4 is a plan view of the map sheet, and Figs. 5 and 6 are flowcharts explaining the operation of the apparatus.

The map display apparatus of this embodiment is a compact and light-weight portable equipment, with its main body 10 having dimensions of 210-(long) x 297(wide) x 20(high) mm and a weight of 1 kg or less. The main body 10 of weather-proof structure incorporates a rechargeable battery or alkaline battery, and can operate at least six hours continuously.

As shown in Fig. 1, the main body 10 has on its side the formation of a map sheet insertion port 10A for inputting a map sheet 20 and a memory insertion port 10B associated with an information reading/writing means 13A. Provided on the top surface are an operation panel 14 including the numeric keys and operation keys, a display control panel 15 including a brightness adjust knob 15A and contrast adjust knob 15B, a map information display device 16, a literal information display device 17, and a start switch 18.

For the operation in the navigation setting mode, a mouse device, trackball or touch panel can be used as the operation panel 14.

In Fig. 2 showing the internal functional blocks in the main body 10, a locating means 12 with an associated antenna receives and analyzes the radio wave transmitted by the NAVSTAR satellite of U.S.A. to detect the present user's location based on the Global Positioning System (GPS). The antenna may be designed so that it is pulled out of the main body 10 at the time of use.

The information reading/writing means 13A operates to read information related to a specific map sheet 20, e.g., spots of interest, hospitals, fuel stations, etc. inclusive of their addresses and telephone numbers, out of a storage medium such as an IC card, and write a destination of travel and route to it in the navigation mode.

An information reading means 13B is a bar code reader which is used to read information, e.g., map number, latitudes and longitudes of reference points A and B, map scale factor, etc., printed in the bar code (22) zone on the map sheet 20.

The locating means 12, information reader/writer 13A, bar code reader 13B, operation panel 14, and display control panel 15 have their outputs delivered to a display control means 11, which produces display control signals to be fed to the map information display device 16 and literal information display device 17.

The map information display device 16 consists of an illumination device 16A and a shutter device 16B as shown in Fig. 3.

The illumination device 16A illuminates the map sheet 20 from behind it in a back-light or side- light operation mode, and it is preferably an electroluminescence element that is bright enough at a low power consumption. The illumination device 16A may be eliminated when the map sheet 20 has a reflective surface.

The shutter device 16B indicates such positional information as the present location and destination by being activated selectively in the rear of the map sheet 20, and it is a fast-response, high-contrast monochrome liquid crystal device having a 640-by-300 dot area for example.

The map sheet 20 is a transparent base material such as a polyester film on which map information is color-printed (refer to Japanese patent publication JP-A-58-1178), and it consists of a map zone 21 and a bar code zone 22 as shown in Fig. 4.

The bar code zone 22 has a record of information including positional information (latitudes and longitudes) of two reference points (A and B) and the scale factor of the map, and it can be printed together with the map zone 21. Alternatively, the bar code zone 22 may be formed in such a different manner as printing bar codes on labels in advance and sticking appropriate one on each map sheet.

The map sheet 20 is inserted into the apparatus through the map sheet insertion port 10A, and this user's operation automatically activates the bar code reader 13B disposed at the deep end of the port to read the bar code.

The map sheet insertion port 10A is mechanized to set the inserted map sheet 20 at the correct position promptly and evacuate it promptly for the replacement.

The literal information display device 17 is located beside the map information display device 16. It is used for displaying information read by the information reader/writer 13A and bar code reader 13B, and is a fast-response, high-contrast monochrome liquid crystal device having a 640-by-100 dot area for example.

Next, the operation of this embodiment will be explained on the flowcharts of Fig. 5 and Fig. 6.

The map display apparatus of this embodiment has three operating modes including a map display mode, position display mode and navigation mode. The navigation mode includes a setting mode and execution mode.

When the start switch 18 is turned on (step 101), a prompt message for setting an operating mode appears on the literal information display device 17 (step 102).

When the user selects the map display mode by using a key on the operation panel 14 (step 103), the illumination device 16A lights up (step 104) and the shutter device 16B opens in its entire area (step 105). Consequently, the map sheet 20 is illuminated from behind it so that the user can watch it in a dark environment.

When the user selects the position display mode (step 103), the information reader/writer 13A reads information out of the IC card (step 107). The locating means 12 operates to detect the present user's location (step 108). A map number is determined from the detected present location, and a message of prompting the insertion of the map sheet 20 of that map number is displayed on the literal information display device 17 (step 109).

The user inserts the specified map sheet 20, and the bar code reader 13B reads the positional information (latitudes and longitudes) of two reference points (A and B in Fig. 4) and map scale factor in the bar code zone 22 on the map sheet 20 (step 110).

The locating means 12 operates again to detect the present location (step 111), and calculates the present location in terms of the coordinates on the map information display device 16 (step 112). The shutter device 16B operates to open and close an area corresponding to the calculated coordinates so as to indicate the present location in the form of a blinking cursor C or mark (step 113). At the same time, the literal information display device 17 displays information pertinent to the indicated position, e.g., spots of interest and fuel stations existing around the position.

With the position display mode being retained (step 115), the locating means 12 detects the present location and repeats the steps 111-114 if it is within the display range of the selected map sheet 20 (step 116), or if the detected present location is out of the range, the sequence returns to step 108 to prompt the insertion of a relevant map sheet 20 and the operation of steps 108-114 explained above is carried out for the new map sheet.

If the map sheet 20 is not replaced with that of the newly specified map number, the apparatus is automatically switched to the navigation mode or to the operation of indicating the heading of movement, allowing of the default of map sheet replacement when the user is busy in maneuvering the vehicle for example.

When the user selects the navigation mode in step 103, a prompt message for selecting the setting mode or execution mode appears (step 117) as shown in Fig. 6.

When the setting mode is selected in step 118, the IC card is read (step 119), and a blinking cursor C or mark appears on the map information display device 16 (step 120). The user inserts a relevant map sheet 20, and sets the destination and route by positioning the cursor C or mark on the displayed map sheet 20 through the operation of the key set 14 (step 121). For this operation, a pointing device such as a mouse device, trackball or touch panel may be used instead of the key set 14. The setup information is written to the IC card in correspondence to the map number by the operation of the information reader/writer 13A (step 122).

When the execution mode is selected in step 118, the operation similar to the position display mode shown in Fig. 5 takes place. In this case, a destination is read out of the IC card (step 125), the destination is indicated (step 126), the distance of the present location to the destination is calculated (step 127) and the calculated distance is displayed on the literal information display device 17 (step 128), all taking place between the step 114 and step 115 of Fig. 5.

According to the foregoing embodiment, map-related information, such as the latitudes and longitudes of reference points and the map scale factor, recorded in the bar code zone 22 can be read automatically by merely inserting a map sheet 20 through the insertion port 10A, and it is possible to use the apparatus easily and reliably as a navigation system that is capable of displaying intelligible map information without the need of a capacious storage medium. Based on the function of displaying a scheduled course and the deviation of the present location from it, the apparatus can also be used as a route guidance system.

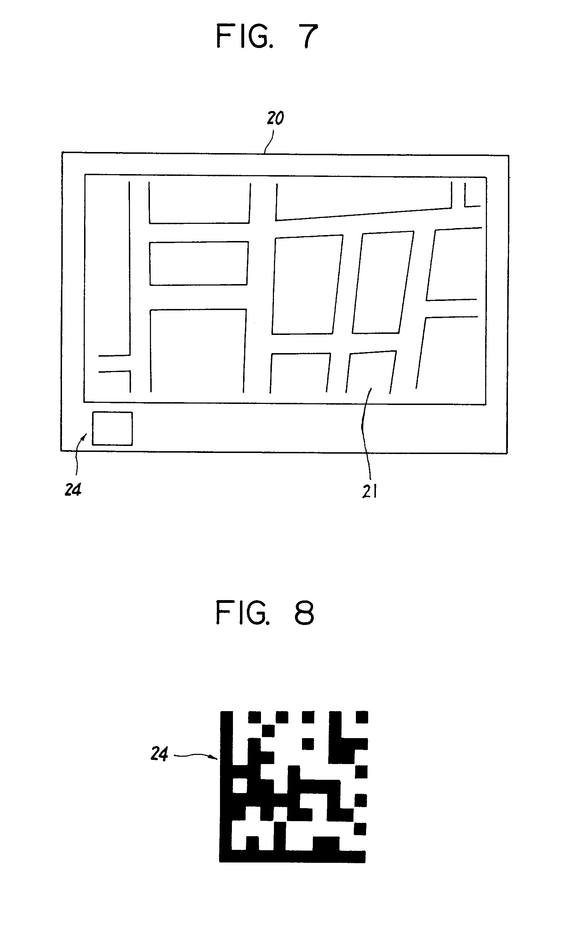

Fig. 7 is a brief plan view of another example of the map sheet based on this invention.

This map sheet is basically the same as the map sheet shown in Fig. 4 except for the use of a two-dimensional bar code 24 in place of the former bar code 22. The two-dimensional bar code 24 is a set of dot strings extending in the longitudinal and lateral directions as shown in the magnified view of Fig. 8, and it can be formed by printing or the like in the same manner as the former bar code 22.

The two-dimensional bar code 24 can record a significantly increased amount of information as compared with the former bar code 22.

The map display apparatus is equipped with a two-dimensional bar code reader 24 in place of the one 13B used in the previous embodiment, and it can be used as a navigation system similar to the previous embodiment and operative to fetch an increased amount of information from a map sheet.

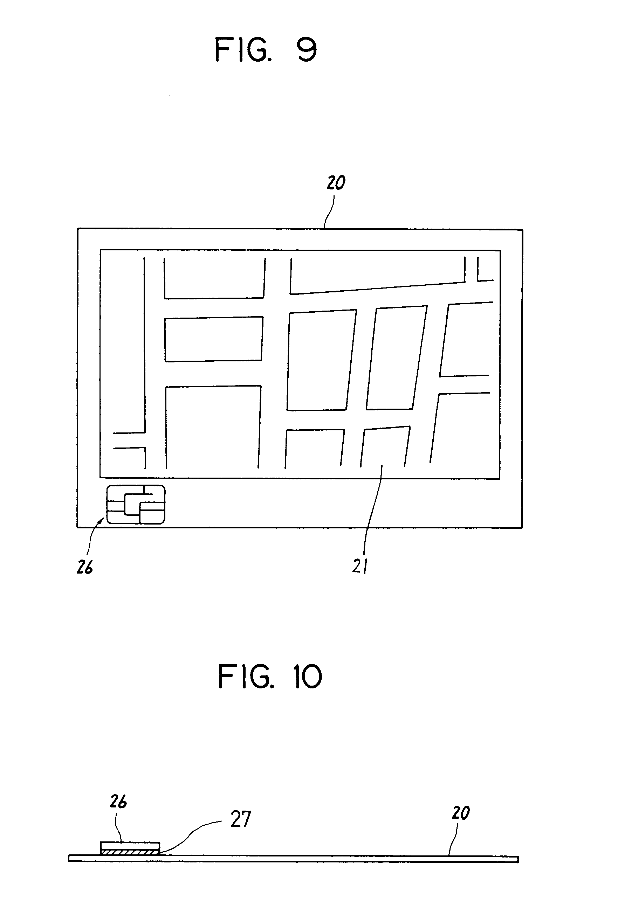

Fig. 9 is a brief plan view of still another example of the map sheet based on this invention.

This map sheet is basically the same as the map sheet shown in Fig. 4, except that an IC chip 26 is bonded to it with adhesive 27 as shown in the cross-sectional diagram of Fig. 10 in place of the bar code 22 of Fig. 4

According to this embodiment, the map sheet 20 can contain a significantly increased amount of information, and it can record names of places and facilities, telephone numbers and the like in addition to the fundamental information such as the latitudes, longitudes and scale factor of the map.

The map display apparatus of this embodiment is equipped with a device for reading information out of the IC chip in place of the bar code reader 13B used in the previous embodiment, and it functions identically to the previous embodiment. Through the provision for the map display apparatus of a device for writing information to the IC chip 26, it becomes possible to store arbitrary information on the IC chip 26.

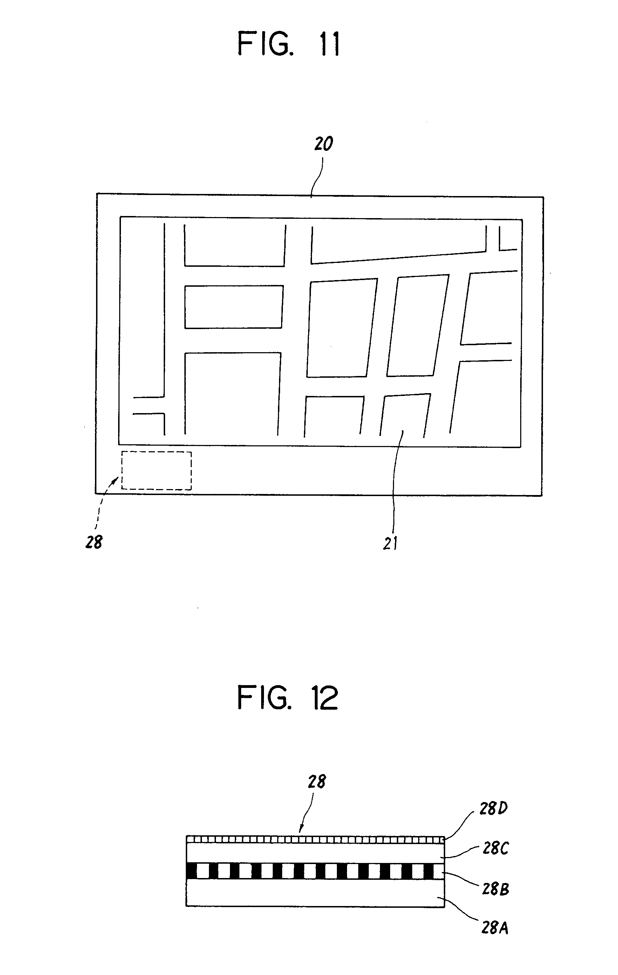

Fig. 11 is a brief plan view of still another example of the map sheet based on this invention.

This map sheet is basically the same as the map sheet shown in Fig.4 except for the provision of an optical recording device 28 in place of the former bar code 22. The optical recording device 28 has a laminated structure of a base film 28A, optical recording layer 28B, protective layer 28C and surface coating layer 28D as shown in the magnified view of Fig. 12. The optical recording layer 28B can be formed by the image transfer process, and the optical recording device of this structure can have its thickness virtually neglected. Alternatively, an optical recording device formed on a label in advance may be stuck on the map sheet.

The map display apparatus is equipped with an optical record reader in place of the bar code reader 13B used in the previous embodiment, and it functions identically to the previous embodiment.

Although several types of map sheets based on this invention have been described specifically, modification can be made within the scope of the invention.

For example, a micro bar code may be employed for the digital information recording zone, and it can be formed by the image transfer process as in the case of the former optical recording device 28.

The location of the digital information recording zone is not confined to the examples shown in the figures, but it can be located in any place on any side of the map sheet.

The base material of the map sheet is not confined to a transparent film, but it may be a film having a reflective surface on which map information is printed, or it may be a sheet of paper or the like.

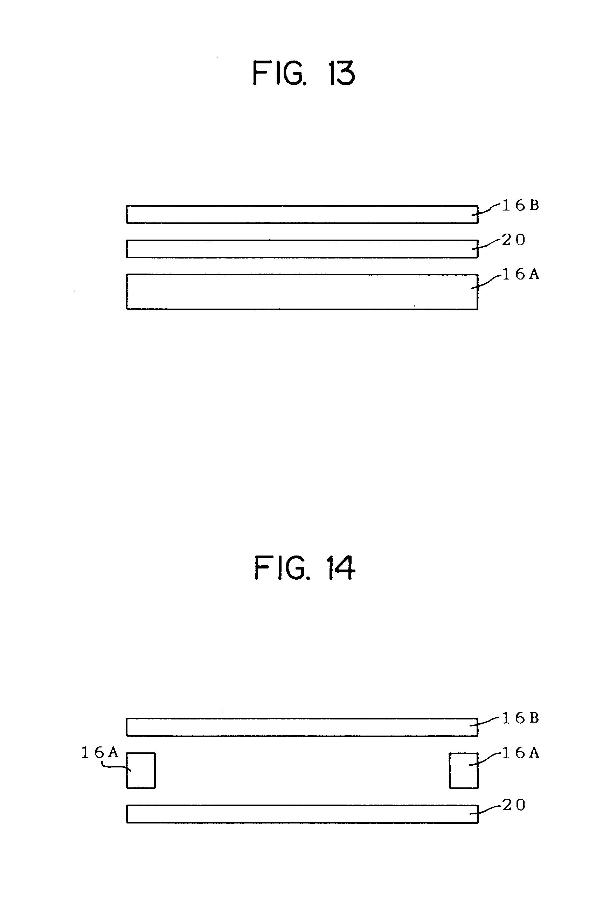

The arrangement of the map information display device is not confined to the one shown in Fig. 3, but the illumination device 16A, shutter device 16B and map sheet 20 may be arranged as shown in Fig. 13 or Fig. 14.

The IC card may be replaced with another digital information memory device such as an optical card, or it may be substituted by the internal memory of the apparatus or the digital information recording device on the map sheet.

According to the foregoing embodiment, information pertinent to a specific map can be fed to the apparatus by merely placing the map sheet at the specified position of the apparatus, and it is possible to use the apparatus easily and reliably as a navigation system.

### [Embodiment 2]

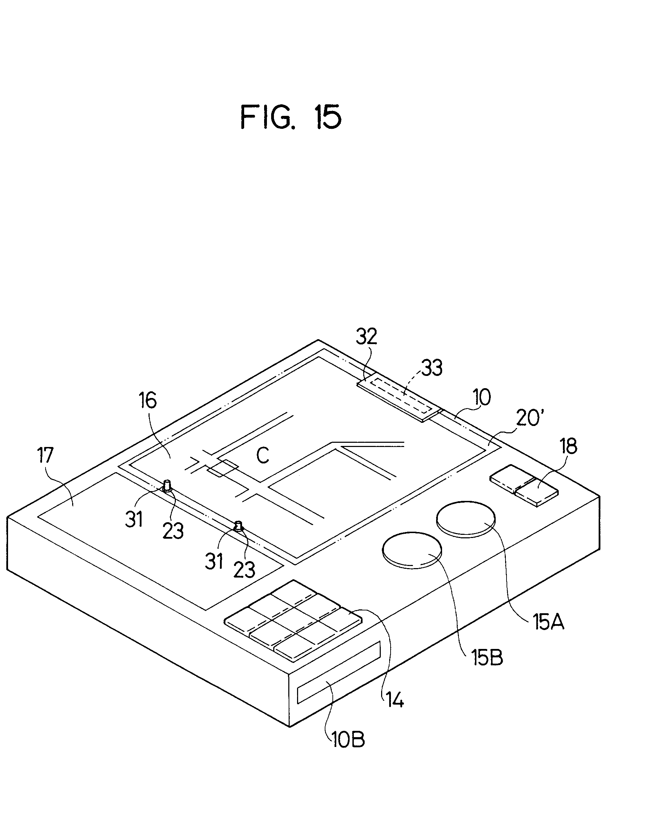

Fig. 15 is a perspective diagram showing the map display apparatus based on the second embodiment of this invention.

In the figure, items equivalent to those of the previous embodiment are referred to by the common numerals and explanation thereof will not be repeated.

Different from the previous first embodiment in which a map sheet 20 is inserted into the apparatus through the map sheet insertion port 10A and it is held in the apparatus to read the bar code zone 22, the second embodiment is designed to set a map sheet 20' on the map information display device 16 by passing two punch holes 23 formed in the margin of the sheet through two pins 31 standing along the edge of the display device 16 and holding another sheet end with a clamp 32 provided on another edge of the display device 16.

The punch holes 23 are exactly formed in the map sheet 20' with regard to map picture thereof so as to maintain positional accuracy of the map on the map information display device 16.

The clamp 32 is equipped therein with a laser- scanning bar code reader 33, by which the bar code zone 22 is read automatically.

This pin-hole sheet holding structure enables the reduction of component parts as compared with the first embodiment, cutting the manufacturing cost and enhancing the positioning accuracy owing to the elimination of a sheet feed mechanism that often develops a backlash movement due to aging.

According to this embodiment, in which map information is printed on a transparent map sheet and only the illumination and position indication are implemented by the display means, intelligible map information can be offered by the simple apparatus without using a capacious information storage medium.

The present user's location is detected by the locating means and it is marked on the map sheet, and the user can easily locate oneself on the map.

By recording the destination or route to it in the information recording medium, it is possible to display information about the deviation of the present location detected by the locating means, and the apparatus can be used as a navigation system.

It is possible to carry out a map display function similar to this embodiment by using a notebook personal computer, with its display screen being partitioned into a map display field and a literal information display field, and feeding the GPS positional information from an external locating unit to the computer through the RS-232C connector.

This embodiment can be modified to eliminate the literal information display device 17 and display the map-related information over the map displayed on the map information display device 16.

### [Embodiment 3]

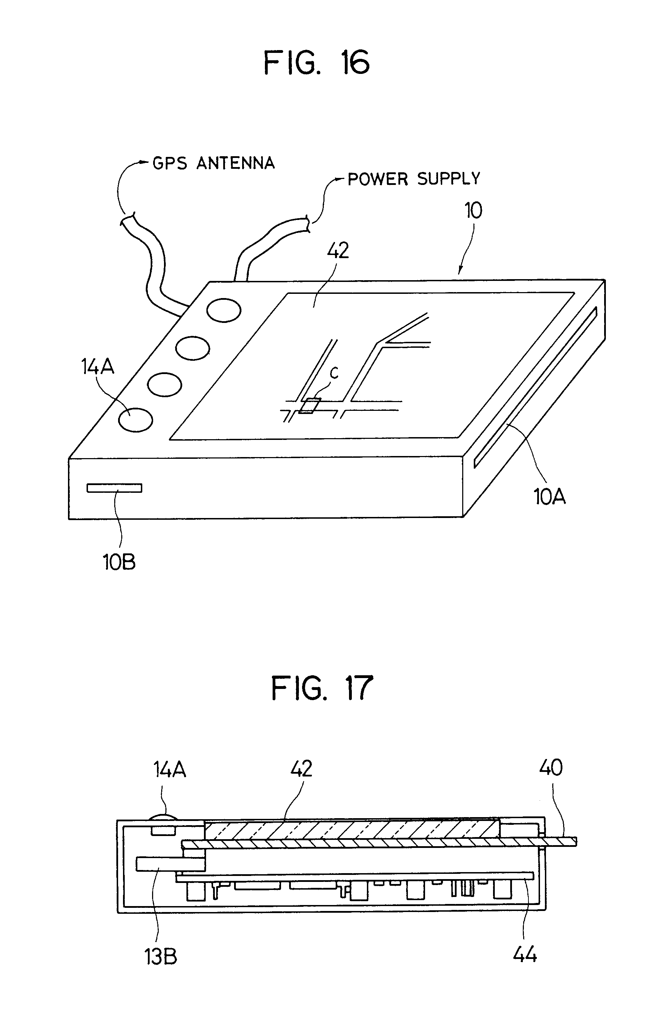

Fig. 16 is a brief perspective diagram of the map display apparatus based on the third embodiment of this invention, and Fig. 17 is a brief cross-sectional diagram of the apparatus.

The map display apparatus 10 of this embodiment is equipped on its top surface with a liquid crystal display device 42, and is designed to insert an exchangeable reflective map sheet (not shown in the figure, but will be explained later) through a map sheet insertion port 10A formed on the side of the apparatus so that the map sheet 40 is located closely beneath the display device 42.

The apparatus 10 incorporates a bar code reader 13B, which reads a bar code printed on the leading end or the side margin of the map sheet 40 when it is set to the specified position, as shown in Fig. 17.

The apparatus 10 has an IC card insertion port 10B, and map-related information is written or read on the inserted IC card by an information reader/writer (not shown).

The apparatus 10 is provided with operational keys 14A used for the setting of operating mode and the like, and has connections of a power cord and a feed line of a GPS antenna.

The apparatus 10 further incorporates a control circuit board 44 which implements the signal processing for indicating the present location or the like on the display device 42 based on the positional information received through the GPS antenna.

The map display apparatus 10 will be explained in more detail. The liquid crystal display device 42 is mainly formed of a liquid crystal layer, and it is equipped with a shutter device. The display device 42 can be a monochrome liquid crystal device identical to the one used in the first embodiment.

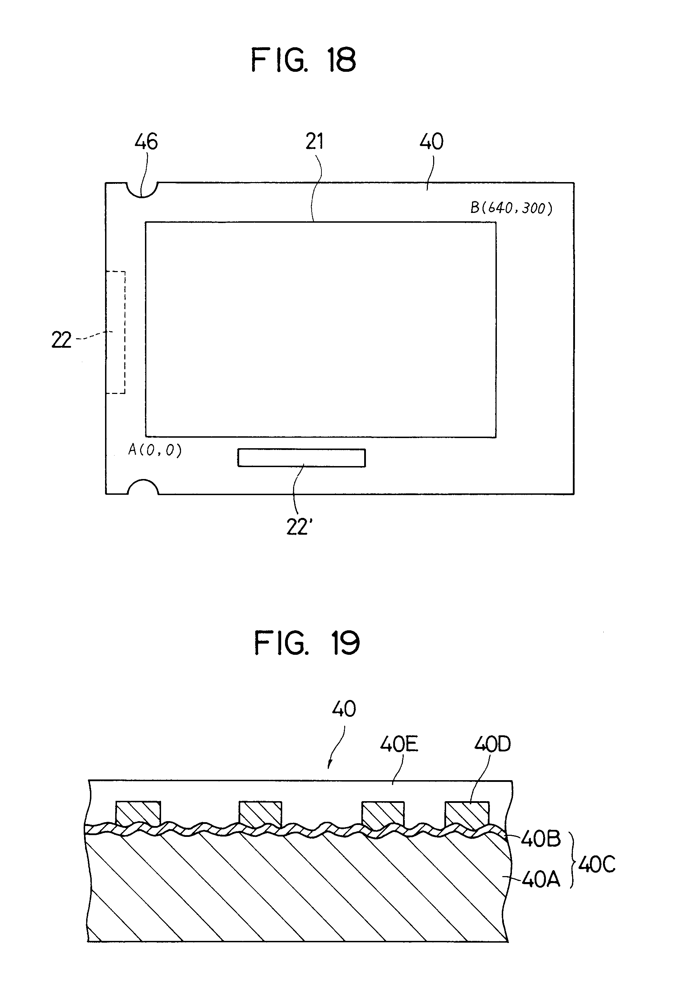

The map sheet 40 is made of a base material such as a polyester film having the formation of cuts 46 on the sides as shown in Fig. 18, on which are printed a map zone 21 defined by points A and B having coordinates (0, 0) and (640, 300) and a bar code 22 or 22' at the end of the rear surface or in the side margin.

The map sheet 40 has a laminated structure, as shown in Fig. 19, made up of a polyester sheet 40A having a rough surface coated with an aluminum evaporation layer 40B, these materials forming a base 40C, an ink layer 40D that forms a printed map information, and a protective layer (over-print) 40E that covers the ink layer.

The light incident to the map sheet 40 from above it is subjected to irregular reflection by the aluminum layer 40B, and accordingly by placing the map sheet 40 beneath the liquid crystal display device 42 as shown in Fig. 17 in a bright environment, the printed map information can be displayed on the display device based on the reflected light from the aluminum layer 40B. Accordingly, the map display apparatus does not need an illumination device such as a back-light device, and the power consumption can be reduced significantly.

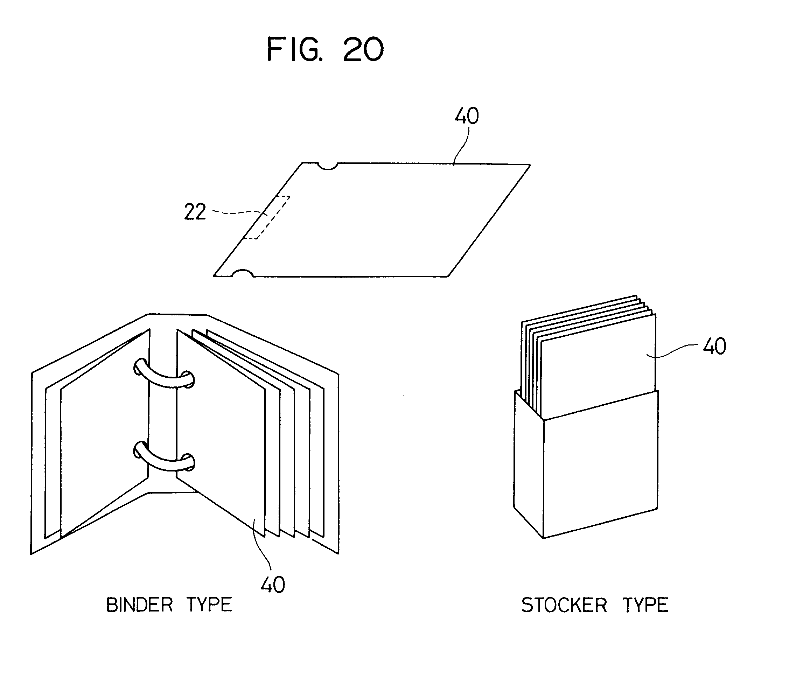

When several map sheets are prepared, they can be filed in a binder or cased in a box so that they can be carried easily, as shown in Fig. 20.

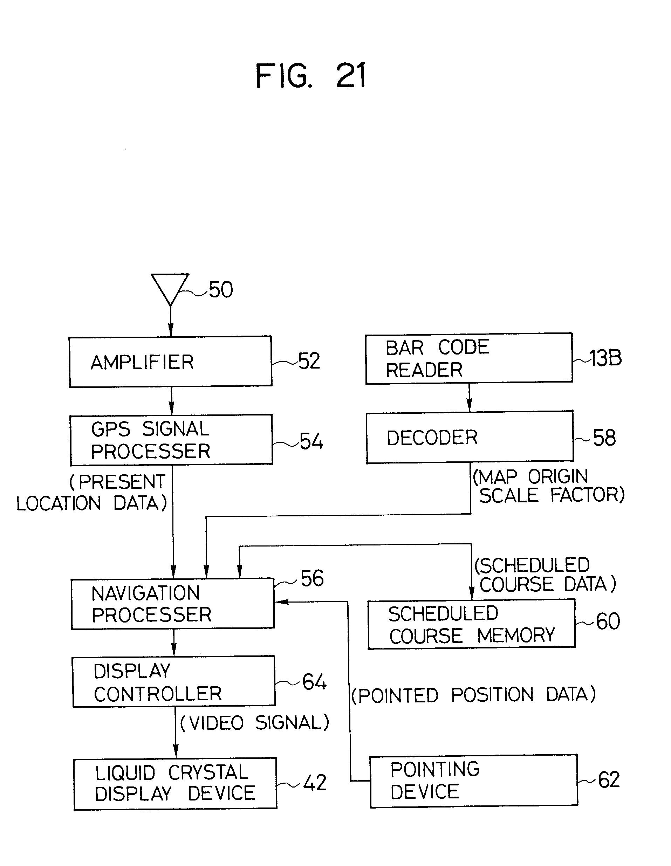

The control circuit board 44 consists of the functional blocks as shown in Fig. 21. The following explains the case of using the positional information transmitted by the GPS satellite.

Positional information carried by the satellite signal is received by the GPS antenna 50 and it is amplified by an amplifier 52. A GPS signal processor (locating means) 54 calculates the present user's location based on the signal and delivers the resulting data to a navigation processor 56.

The bar code reader 13B reads the origin (reference point) of the map and scale factor data recorded in the bar code 22, and these data are fed through a decoder 58 to the navigation processor 56.

The navigation processor 56 receives scheduled course data from a scheduled course memory 60, which is the IC card described previously for example, and also receives data from a pointing device 62 that is used by the user to specify a point on the map.

The apparatus includes an information reader/writer (not shown) for reading information out of an IC card or the like that stores literal information corresponding to a number of map sheets and writing the destination and route to the scheduled course memory 60 during the navigation mode.

The navigation processor 56 provides the positional information including the present location, scheduled course and destination for a display controller 64 based on the information received from the GPS processor 54, scheduled course memory 60 and pointing device 62, and the display controller 64 displays the positional information on the liquid crystal display device 42 over the map information which is displayed by the reflection light.

The operation of this embodiment, which is substantially identical to the first embodiment shown in Fig. 5 and Fig. 6, is as follows.

When the start switch is turned on (step 101), a a prompt message for setting an operating mode appears on the liquid crystal display device 42 (step 102).

When the user selects the map display mode by using the operation key 14A (step 103), the shutter device opens in its entire area (step 105). Consequently, the map sheet 40 has its printed map information displayed on the display device 42 by the light reflected on the surface of the map sheet 40. The active illumination of step 104 in the preceding embodiment is not employed in this embodiment.

The subsequent operations are substantially identical to the first embodiment and explanation thereof is omitted.

According to this embodiment, map information printed on a reflective sheet is displayed on the display device by utilization of the light reflection on the sheet and the operation of the liquid crystal shutter device, and intelligible map information displayed in arbitrary number of colors can be offered by the simple apparatus without using a capacious information storage medium and the power consumption of the apparatus can be reduced significantly since it employs no illumination device.

Positional information such as the present location detected based on the GPS location technique is displayed over map information that is displayed on the display device, and the user can easily locate oneself on the map.

By storing the destination or route to it and other positional information in a storage medium (IC card), the deviation of the present location detected based on the GPS can be displayed, and the apparatus can be used as a route guidance system.

The reflective map sheet 40 may be made of a base material having both reflective surfaces, with map information being printed on both sides.

### [Embodiment 4]

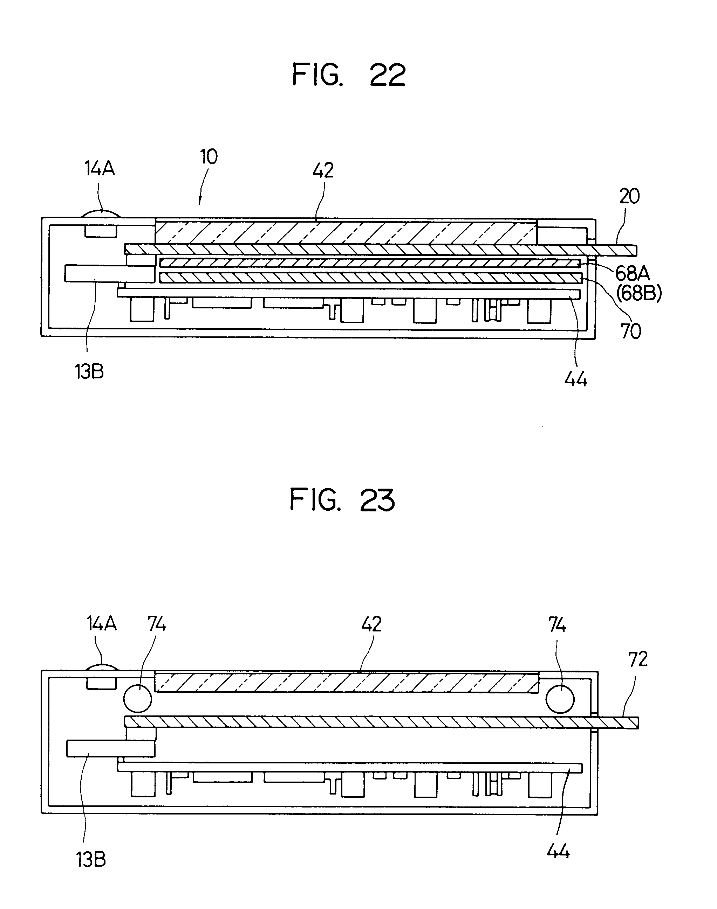

Fig. 22 is a brief cross-sectional diagram of the map display apparatus based on the fourth embodiment of this invention.

The map display apparatus of this embodiment is substantially identical to the third embodiment, except that a transparent map sheet 20 is used instead of the reflective map sheet 40 of the third embodiment, a detachable reflection plate 68A or semi-transparent reflection plate 68B is disposed behind the map sheet 20, and a back-light device 70 is disposed behind the reflection plate.

The transparent map sheet 20 is made of a transparent film of polyester or the like, instead of the base material 40C for the reflective map sheet 40 shown in Fig. 19, and map information is printed on its surface. Transparent map sheets are described in Japanese patent publication JP-A-58-1178.

The reflection plate 68A is substantially identical to the base material 40C of the reflective map sheet 40, and it is designed to behave the irregular reflection of light on the surface. The semi-transparent reflection plate 68B have both functions of the irregular reflection of light on its surface and the transmission of the light coming in from behind it, and it has a structure similar to the base material 40C shown in Fig. 19, with its aluminum evaporation layer 40B being made thinner or partially etched off.

The back-light device 70 is activated to illuminate the rear surface of the semi-transparent reflection plate 68B when it is used, and it can be formed by the combination of a cold cathode-ray tube and a light guide. Alternatively, the back-light device 70 can be one based on the electroluminescence that is bright enough and consumes less power.

The map display apparatus of this embodiment with the attachment of the reflection plate 68A can be used in the same manner as the third embodiment. The apparatus with the attachment of the semi-transparent reflection plate 68B, with the back-light device 70 being deactivated, can be used in the same manner as the third embodiment, or it can be used easily in a dark environment by activating the back-light device 70 in step 104 shown in Fig. 5.

### [Embodiment 5]

Fig. 23 is a brief cross-sectional diagram of the map display apparatus based on the fifth embodiment of this invention.

The map display apparatus of this embodiment is substantially identical to the third embodiment, except that an opaque map sheet 72 that is a paper or opaque base material, with map information being printed thereon, is used instead of the reflective map sheet 40 used in the third embodiment, and an illumination light source 74 for illuminating the front surface of the map sheet 72 is disposed between the liquid crystal display device 42 and the opaque map sheet 72.

The opaque map sheet 72 is made of an opaque film of paper or plastics instead of the base material 40C of the reflective map sheet 40 shown in Fig. 19, and map information is printed on its surface.

According to this embodiment, the opaque map sheet 72 of printed map information is placed behind the liquid crystal display device 42 and is illuminated from the front surface, allowing the user to have a clear view of the map through the liquid crystal display device even though the map sheet 72 is made of a material with a low reflectivity such as paper, and the range of choice of the map sheet material can be expanded.

### [Embodiment 6]

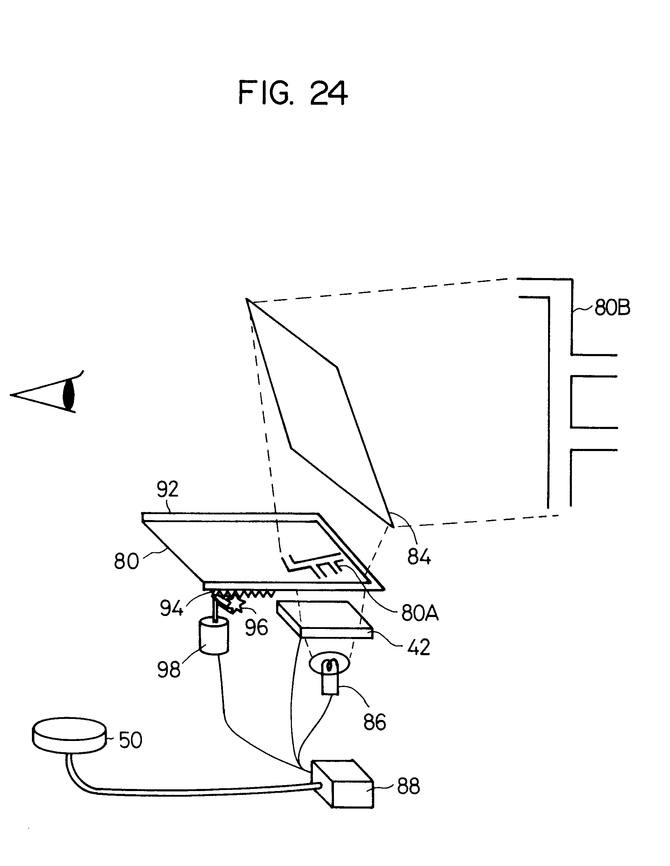

Fig. 24 is a brief perspective diagram showing the principal arrangement of the map display apparatus based on the sixth embodiment of this invention.

The apparatus of this embodiment includes a transparent map sheet (film map) 80 formed of a transparent base material on which map information is printed in a reduced size, a liquid crystal display device 42 disposed to confront the transparent map sheet 80, a projection light source 86 which projects positional information displayed on the display screen and map information recorded on the map sheet in overlap fashion on a head-up display hologram 84, and controller (computer) 88 which causes the apparatus to function as a navigation system. The controller 88 is connected to a GPS antenna 50 to receive the GPS signal.

The map sheet 80 is positioned correctly by being set on a frame stage 92. The frame stage 92 is provided with a rack 94 engaged with a pinion gear 96 that is driven by a motor 88 so that it can reciprocate. The frame stage 92 has another rack- pinion mechanism (not shown) in a crisscross arrangement with the former one, so that it can move along the orthogonal paths. Accordingly, by sliding the frame stage 92 in two-dimensional directions, the user can set an intended portion of the map sheet 80 over the display device 42.

The transparent map sheet 80 is a transparent base material such as a polyester film, on which the map zone 21 and bar code zone 22 are laid out and map information is color-printed in the same fashion as the case shown in Fig. 4.

The map information is a number of map areas printed in a reduced size in a matrix array in the map zone 21. Alternatively, the map sheet 80 may have a continuous print of a wide map area in the map zone 21.

The map sheet 80 set on the frame stage 92 can be replaced with another sheet at one end of the stage. The stage is accompanied by a bar code reader (not shown) for reading map-related information printed in the bar code zone 22 at one end of the map sheet 80.

The map display apparatus is provided with the head-up display hologram 84 mentioned previously disposed above the map sheet 80. By turning on the projection light source 86, information about the present location that is displayed on the liquid crystal display device 42 through the shutter device and map information 80A printed in a reduced size on the map sheet 80 are projected by being focused on a virtual screen 80B behind the hologram 84. As a result, the user located in front of the hologram 84 can watch the map information 80B that is imaged behind the hologram 84.

The controller 88 produces various control signals for displaying positional information such as the present location on the display device 42 based on the information of present location received as a satellite signal by the GPS antenna 50. The controller 88 operates on the shutter device of the display device to mark the present location, and at the same time activates the stage drive motor 98 so that the present location on the map is coincident with the indicated present location.

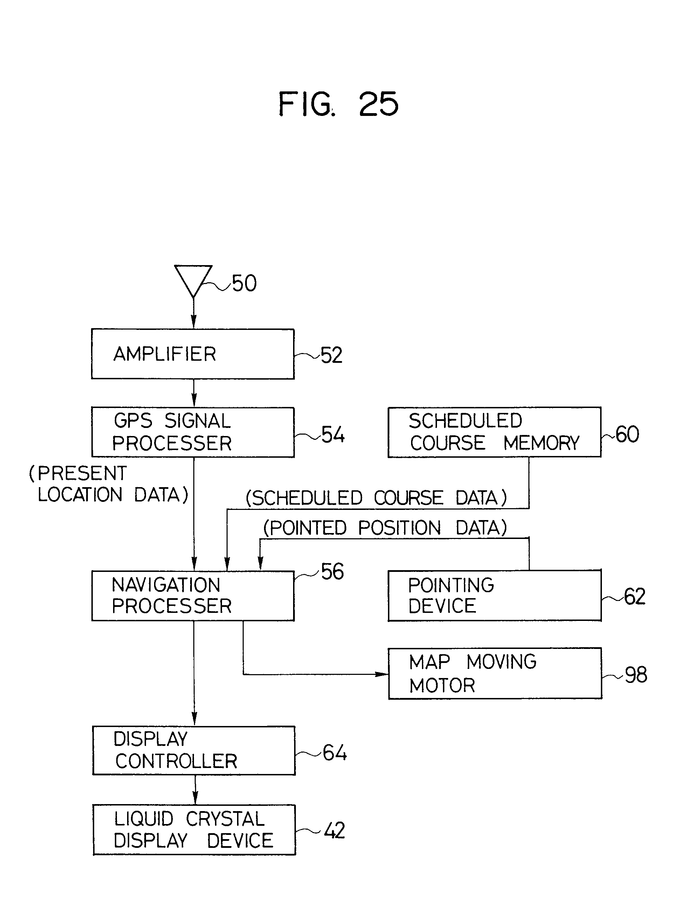

Among the functional blocks included in the controller 88 as shown in Fig. 25, the navigation processor 56 produces positional information such as the present location, scheduled course and specified positions from the information provided by the GPS signal processor 54, decoder, scheduled course memory 60 and pointing device 62 in the same manner as the preceding third embodiment, and delivers the positional information to the display controller 64, by which the present location is marked on the liquid crystal display device 42. The navigation processor 56 sends a control signal to the stage drive motor 98, which then moves the map sheet 80 on the frame stage 92 so that the map information is coincident with the present location indicated on the display screen.

The projection light source 86 is turned on when the map information on the map sheet 80 is made coincident with the present location on the display screen to project the map information and present location in overlap fashion on the head-up display hologram 84. Consequently, it is possible for the user to see overlap images of the information of arbitrary magnified size on the virtual screen, and the map display apparatus functions as a navigation system.

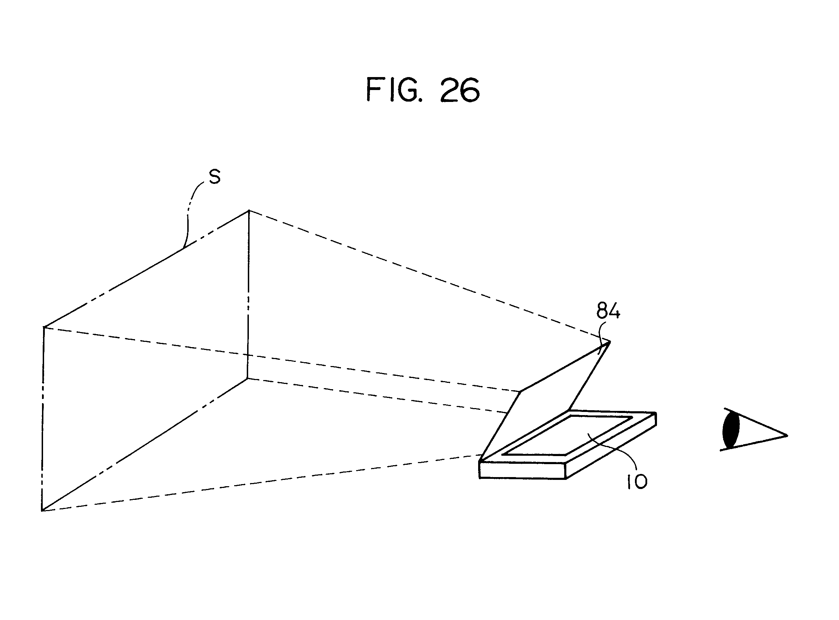

Fig. 26 is a brief perspective diagram showing an example of the external view of the map display apparatus described above. The map display apparatus of this embodiment is accommodated in a case, on which are formed a map sheet insertion port and IC card insertion port and are provided with an operation panel including the numeric keys and operation keys, a display control panel including a brightness adjust knob and contrast adjust knob, a literal information display screen, and a start switch, although these items are not shown in the figure.

Provided in the case is an information reader/writer which functions to read literal information for each map sheet and write the destination and route on the IC card.

The outputs of the information reader/writer, bar code reader, operation panel and display control device are sent to the controller 88.

The map display apparatus of this embodiment can be installed on an automobile. The apparatus is disposed on such a place as the console box between the driver and the navigator so that it can be easily watched and accessed by the user, and the head-up display hologram 84 is stuck on the windshield surface for example. In Fig. 26, indicated by S is the virtual screen on which images are focused by means of the head-up display hologram 84.

The operation of this embodiment, which is substantially identical to the first embodiment, will be explained on the flowcharts of Fig. 5 and Fig. 6.

When the start switch is turned on (step 101), a a prompt message for setting an operating mode appears on the literal information display screen (step 102).

When the user selects the map display mode by the key of the operation panel (step 103), the projection light source 86 is turned on (step 104) and the shutter device opens in its entire area (step 105). Consequently, the map sheet 80 is illuminated from behind it and has its map information displayed on the virtual screen S, and the user can watch it in a dark environment.

The subsequent operations are substantially identical to the first embodiment and explanation thereof is omitted.

According to this embodiment, map-related information, such as the latitudes and longitudes of reference points and the map scale factor, recorded in the bar code zone 22 can be read automatically by merely setting the map sheet 80 on the frame stage 92, and it is possible to use the apparatus easily and reliably as a wide range navigation system that is capable of displaying intelligible map information in arbitrary magnified size without the need of a capacious storage medium.

The apparatus is capable of displaying the deviation of the present location from the scheduled course displayed on the map that is projected on the virtual screen S, and it is possible for the apparatus to be used as a navigation system.

An additional advantage of this embodiment is that the liquid crystal display device 42 is small, and accordingly a compact map display apparatus can be accomplished.

### [Embodiment 7]

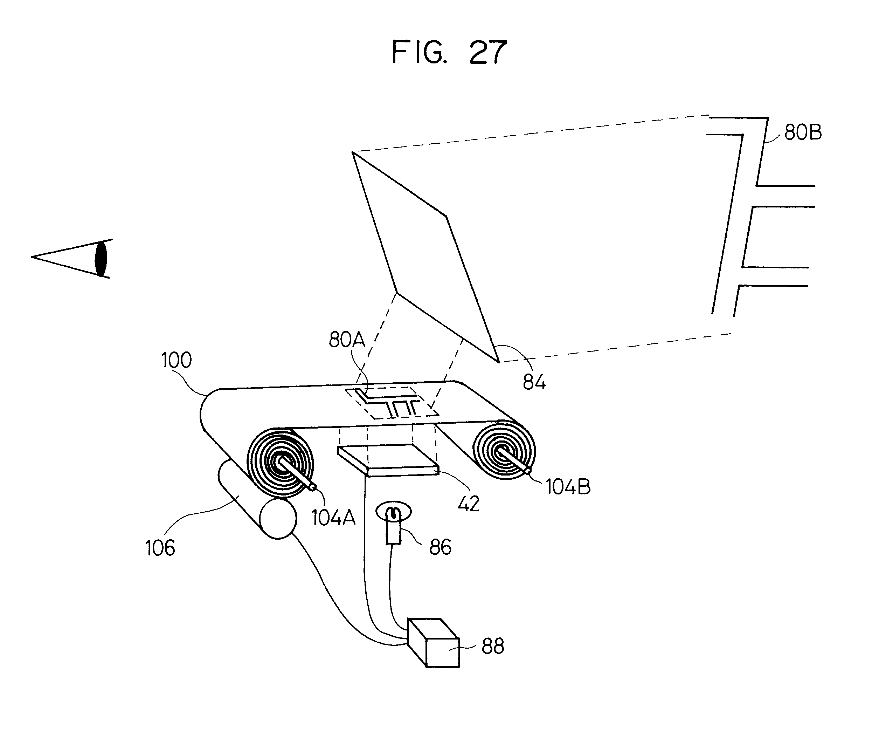

Fig. 27 is a brief perspective diagram showing the principal arrangement of the map display apparatus based on the seventh embodiment of this invention.

The map display apparatus of this embodiment is substantially identical to the sixth embodiment, except that the map sheet 80 set on the frame stage 92 shown in Fig. 24 is replaced with an elongated film map 100 which is wound on reels 104A and 104B and driven in the longitudinal direction by the operation of a film take-up motor 106. The GPS antenna 50 is not shown in the figure.

According to this embodiment, as in the case of the previous sixth embodiment, positional information such as the present location and map information of the film map 100 can be displayed in overlap fashion on the virtual screen S, and it becomes possible to display map information of a very wide area continuously on the virtual screen S by merely moving the film map 100 in its longitudinal direction in response to the vehicle speed for example. Consequently, it is possible for the apparatus to be used as a navigation system that covers a wider area as compared with the previous sixth embodiment.

Since the film map 100 is wound on reels, a great deal of map information can be packed in a very small space, whereby a compact map display apparatus can be accomplished.

The film map explained above is not limited to a continuous record of map information, but it may be a number of divisional map areas arranged in a matrix array and it may be recorded in a different manner instead of printing.

It is of course possible to modify the foregoing seventh embodiment so that the film map 100 is movable in the lateral direction, too.

This embodiment is a map display apparatus based on a head-up display scheme that is superior in the operational repeatability, inexpensive and capable of indicating the present location on an intelligible map that is displayed by being magnified in arbitrary number of colors.

### [Embodiment 8]

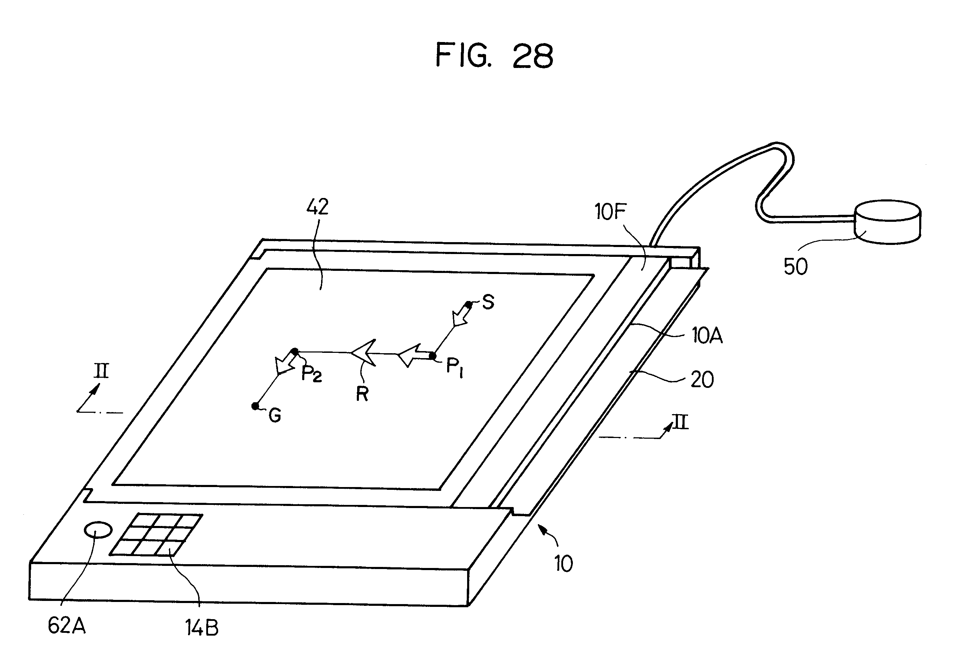

Fig. 28 is a brief perspective diagram showing the external view of the map display apparatus based on the eighth embodiment of this invention.

The map display apparatus 10 of this embodiment is designed to set a map sheet 20 beneath the display device 42. The map sheet 20 is inserted through an insertion port 10A and set at the specified position in a sheet room formed along the display device 42.

The apparatus 10 receives the satellite signal with an associated GPS antenna 50 to determine the present location, and marks the present location on the display screen at the relevant position of the map information on the map sheet 20. The apparatus 10 has a key set 14B and trackball 62A used to set the operating mode and positions. The GPS antenna 50 is provided with a magnet at its bottom, by which it is mounted detachably on the main body of the map display apparatus 10.

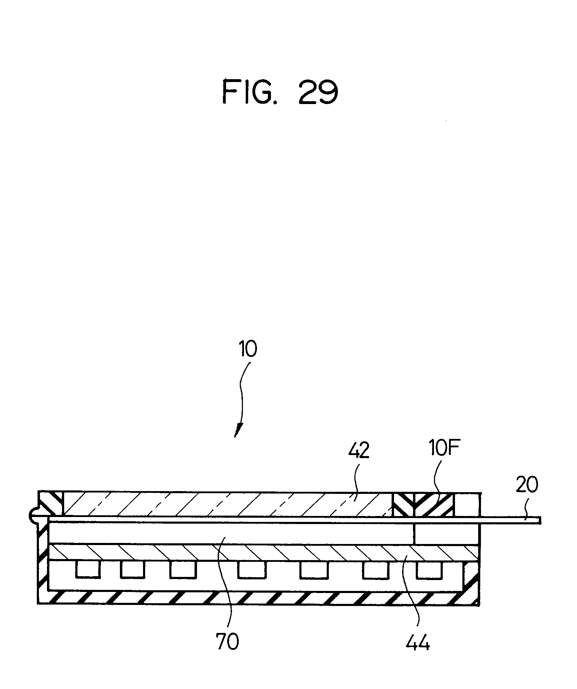

Fig. 29 is a cross-sectional view of the apparatus 10 taken along the line II-II of Fig. 28, in which a back-light device 70 is disposed beneath the map sheet 20, and a control circuit board 44 on which the control functions for realizing navigation system are packaged is disposed beneath the back-light device 70.

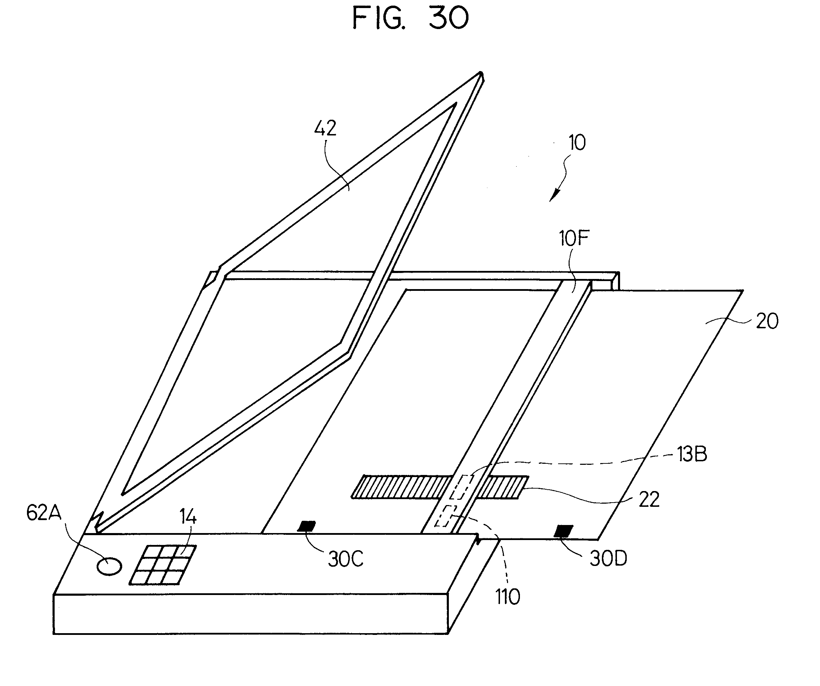

The apparatus 10 has its display device 42 fitted to open or close by being pivoted at one side as shown in Fig. 30. Fig. 30 shows the state for inserting the map sheet 20. In its closed state, another side comes to the internal edge of the frame 10F as shown in Figs. 28 and 29.

The apparatus 10 incorporates, in the rear of the frame 10F end section, a bar code reader 13B for reading a bar code recorded on the map sheet 20 and mark sensor 110 for detecting the insertion marks 30C and 30D as will be explained shortly.

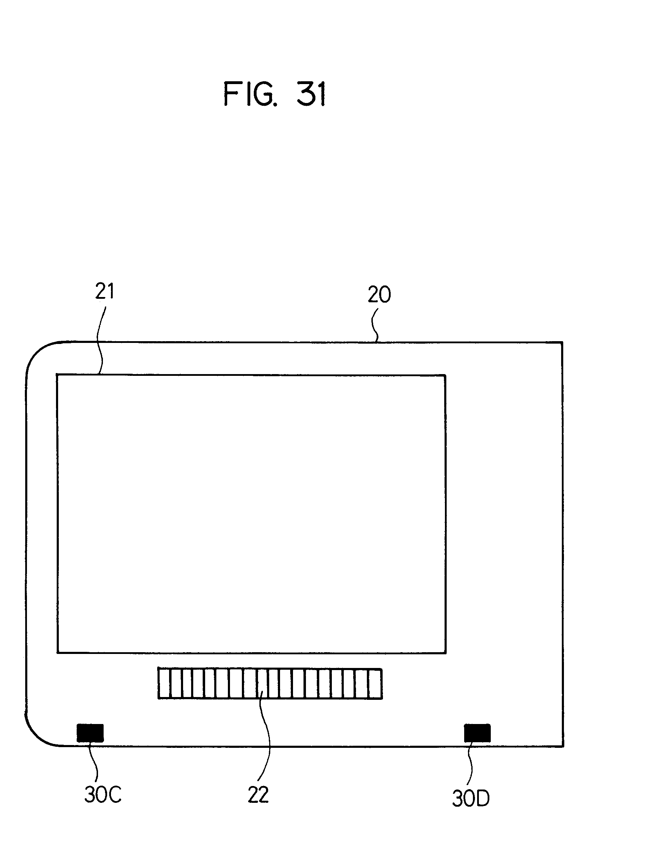

The map sheet used in this embodiment is a transparent base material such as a polyester film on which map information is recorded by printing or the like along with a map zone 21, a bar code 22 and two spaced sheet insertion marks 30C and 30D that are recorded in a marginal space, as shown in Fig. 31.

For the sake of easy insertion into the port 10A, the map sheet 20 has its front corners rounded out as shown.

In the map display apparatus of this embodiment, the map sheet 20 is inserted through the insertion port 10A while the display device 42 is open as shown in Fig. 30. During the inserting operation, when the leading side insertion mark 30C is detected by the mark reader 110, the bar code reader 13B is activated to read the bar code 22, and the bar code reader 13B halts the operation on detecting the trailing side insertion mark 30D by the mark reader 110.

The control circuit board 44 of this apparatus includes the same functional blocks as shown in Fig. 21.

The navigation processor 56 has a function of delivering information to the display controller 64 in the form of a video signal when the departure point, destination, one or more passage points on the scheduled course on the map of the map sheet 20 are inputted on the display device 42 placed over the map sheet 20 by the user by means of a pointing device 62 (trackball 62A) so that line segments that connect the inputted points and heading marks, e.g., arrows, on these points are displayed on the display device 42.

The navigation processor 56 further has a function of calculating, at the arrival at each intermediate point, the distance to the next passage point or destination, and a function of displaying the calculated distance between the two points in the literal information display zone of the display device 42 (a marginal section outside the map display zone 21).

Next, the operation of this embodiment will be explained.

The operation of this map display apparatus as a navigation system is identical to the first embodiment shown in Fig. 5 and Fig. 6.

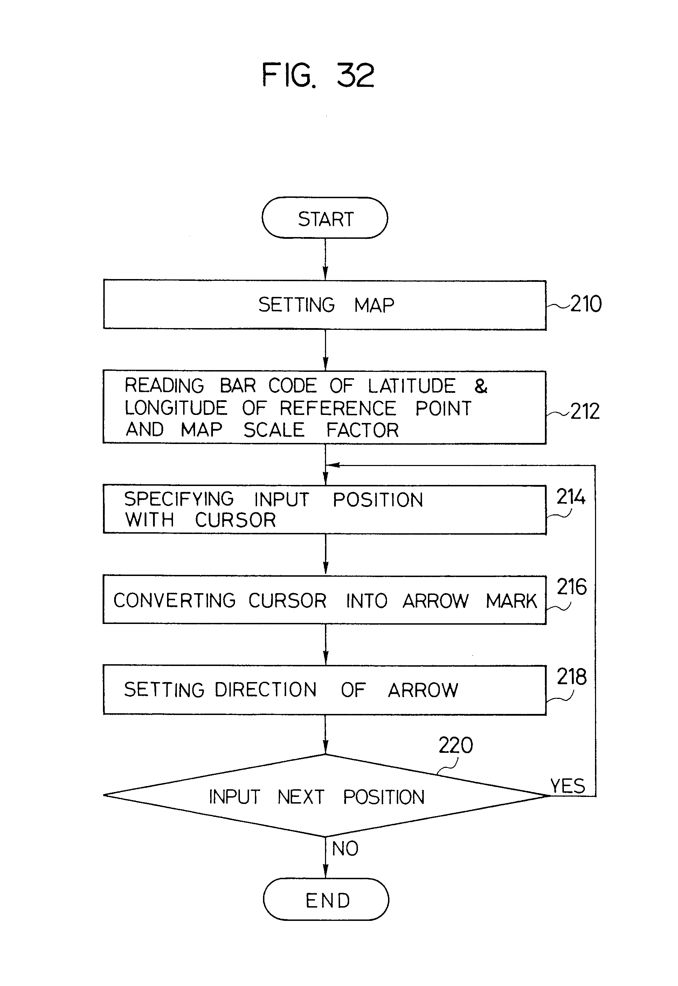

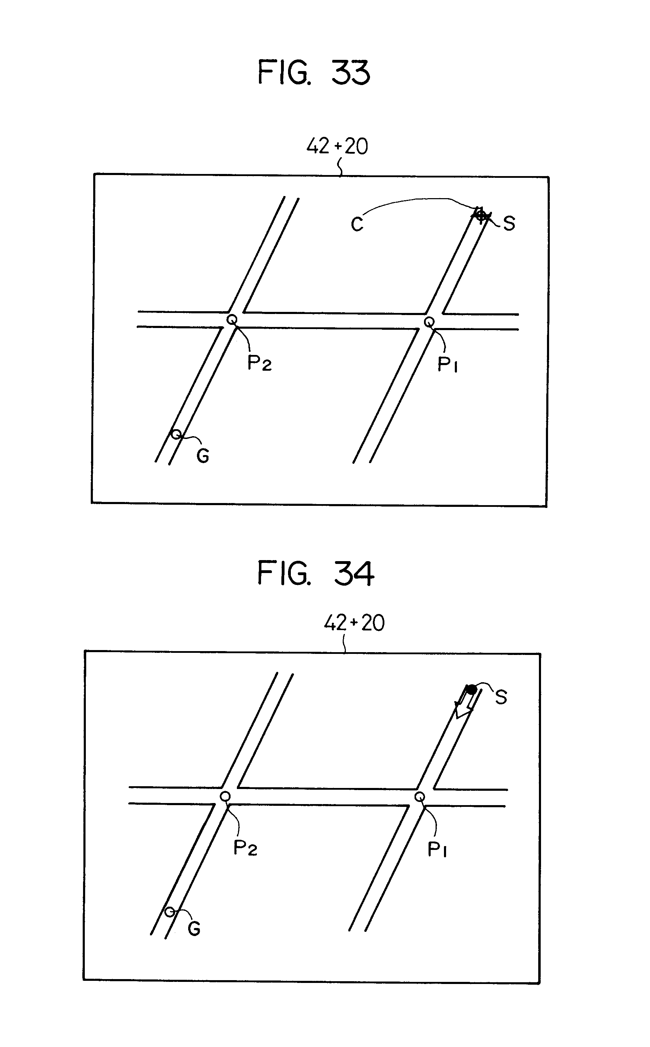

The operation for displaying the scheduled course and heading will be explained on the flowchart of Fig. 32 with reference to Fig. 33 through Fig. 37.

Shown in Figs. 33 - 37 in a conceptual manner are images of the scheduled course from the starting point S to the destination G displayed in accordance with the flowchart on the display device 42 over the map sheet 20.

Initially, the map sheet 20 is set at the specified position in the map display apparatus 10 (step 210).

During the sheet inserting operation, map information, e.g., the latitudes and longitudes of the two reference points and the scale factor of the map, in the bar code zone 22 is read (step 212), and thereafter the correlation between the latitudes and longitudes on the map and the coordinates on the display screen is calculated.

The user operates the pointing device 62 to bring the cursor C to the starting point S on the screen image shown in Fig. 33 (step 214), and inputs the cursor position so that the cursor mark " + " varies to an arrow indicative of the heading of movement (step 218) as shown in Fig. 34.

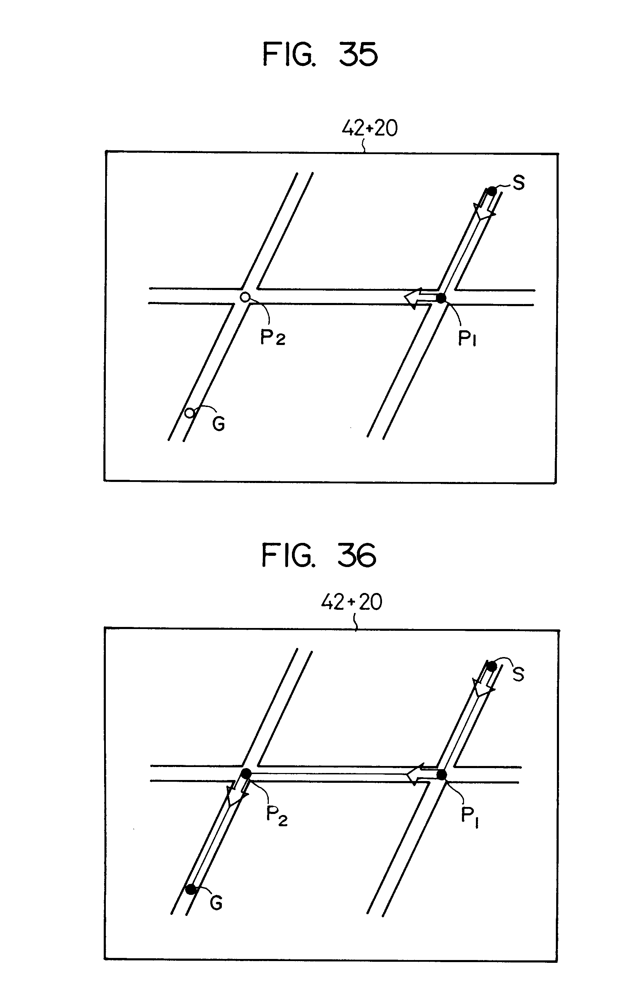

The operational sequence returns to step 214 for the input of the first scheduled passage point P1, and as a result of the process of steps 214 - 218 for the point P1, a solid line segment that connects the starting point S and passage point P1 and an arrow of heading at P1 are displayed as shown in Fig. 35. The course line may be displayed in the form of a dashed line.

These operations are repeated sequentially for the next passage point P2 and the destination G, and the scheduled course from S to P1, to P2, and to G in the form of linked line segments and arrows of heading on these points except for G are displayed on the display screen 42 as shown in Fig. 36.

On the scheduled course displayed on the display screen 42 as explained above, the present location detected based on the GPS signal from the GPS antenna 50 is indicated as a blinking arrow mark R as shown in Fig. 28, so that the user can easily check that the present location is on the scheduled course, and the user can reach the destination accurately.

In addition, at the arrival at the passage point P1, the distance and direction to the next passage point P2 or destination G are displayed on the display screen 42, and the user can easily foresee the frontal course.

The distance calculation is based on the latitudes and longitudes of the positions calculated from the map scale factor and the latitudes and longitudes of the reference points read out of the bar code.

The arrival at the scheduled passage point P1 is determined on detecting the coincidence of the present location detected by the GPS signal with the latitude and longitude of the point P1. In this case, the judgment of arrival may be done on detecting the present location within a certain distance, e.g., 30 m, from the point P1 in consideration of the error involved in the GPS-based measurement.

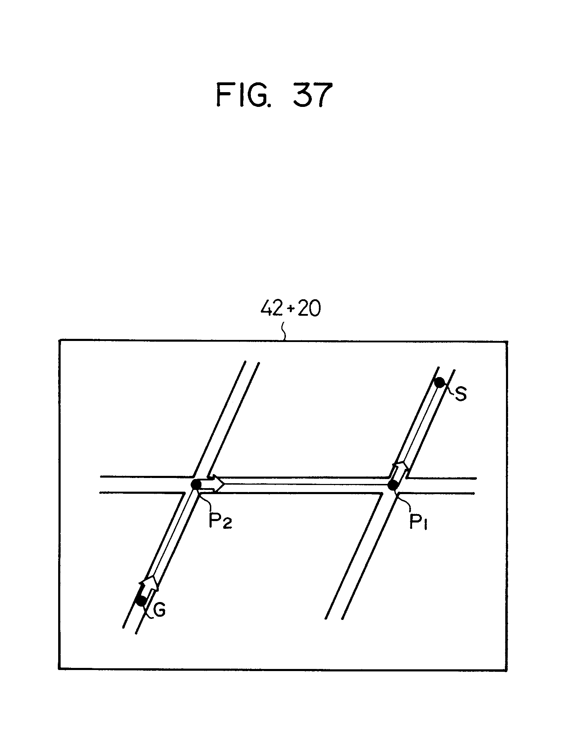

This embodiment is capable of leading the user to return to the starting point by tracing back the forward course based on the data of scheduled course that has been inputted. In this case, with the return mode being selected, the arrow marks on the display shown in Fig. 36 are shifted by being reversed for the pointing direction from P2 to G, from P1 to P2, and from S to P1 as shown in Fig. 37 so as to obtain and display scheduled return course wherein relation between the destination G and the starting point S is reversed.

Another navigational function implemented by this embodiment is to store sets of already inputted scheduled course data (latitudes and longitudes of points and headings on the points) in a storage medium such as an IC card and display a scheduled course as shown in Fig. 36 by merely reading out a relevant set of data for next navigation. By storing such scheduled course data named for individual destinations, necessary scheduled course can be easily read out and displayed.

Besides the manual input of scheduled course data explained above on the flowchart, an alternative input method is to measure the latitude and longitude and the heading of an arbitrary point at a certain time interval and store a set of measured values in actual drive. In this case a certain threshold value may be given to a running distance and measured value may be prohibited from storing when the running distance is short because of traffic jamming so that the measured values with appropriate interval can be stored. The threshold value may be varied depending on the map scale factor read out of the bar code 22.

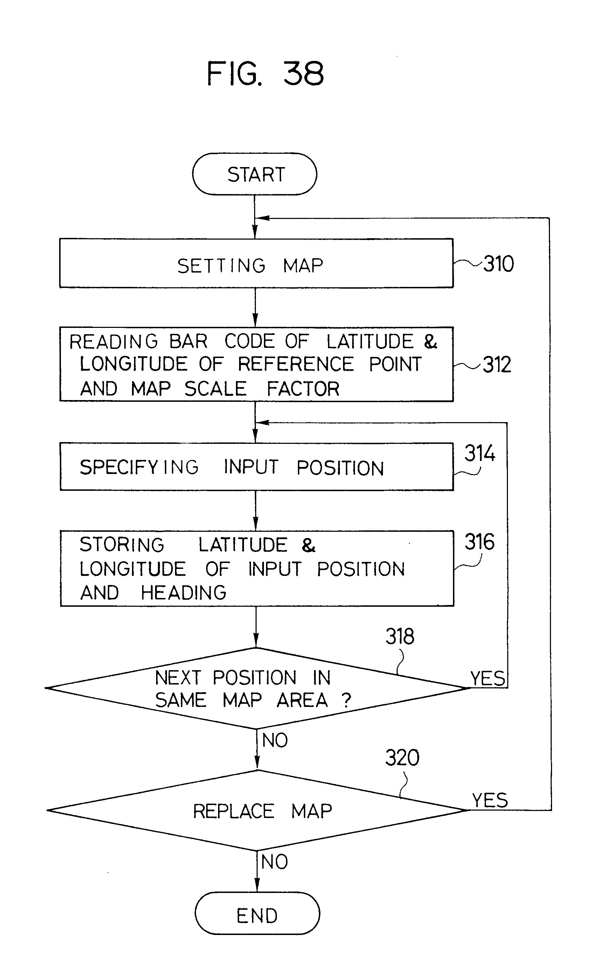

Next, the operation of the apparatus of the case of a scheduled course running across more than one map sheet will be explained on the flowchart of Fig. 38.

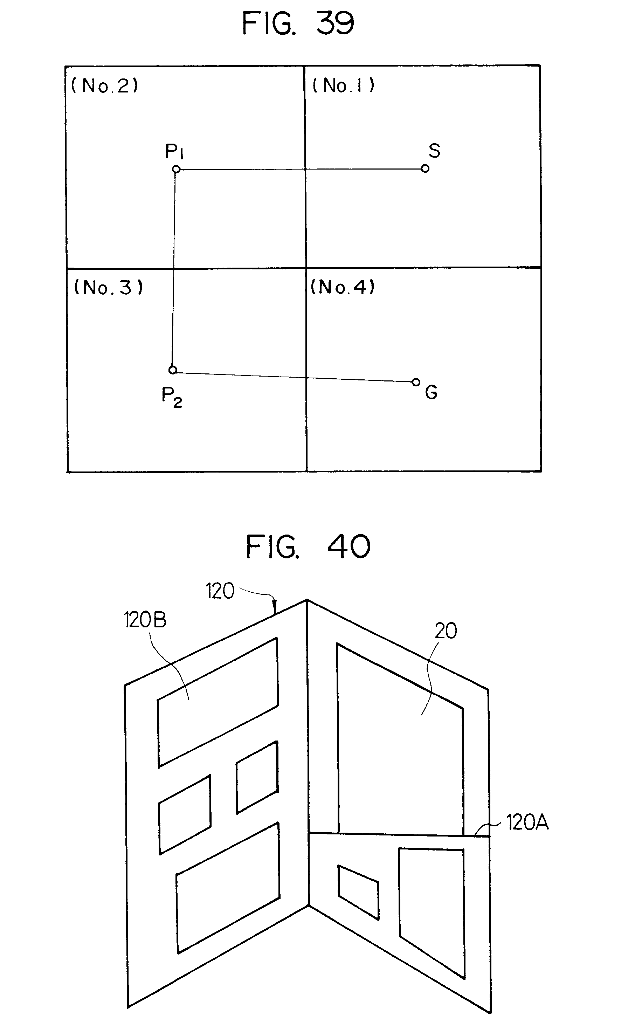

In case a scheduled course runs in four maps recorded on map sheets indicated by No.1 through No. 4 in Fig. 39, the user sets the No.1 map sheet that includes the starting point S in the map display apparatus 10 (step 310). The apparatus reads the latitudes and longitudes of the reference points and the map scale factor in the bar code zone (step 312).

The user operates the input device to input the starting point S as shown by steps 214 - 218 in Fig. 32 (step 314), and the apparatus stores the latitude and longitude of the starting point S and the heading on it in the storage medium (step 316). If the next scheduled passage point is included in the same map (step 318), the same operations are repeated from step 314, or otherwise the user replaces the map sheet with the No. 2 map sheet by returning from step 320 to step 310 and the operations of steps 312 - 318 are carried out for the new map sheet.

The selection of the No. 2 map sheet is prompted in such a way that when the No. 1 map sheet is set, the map numbers of eight surrounding map sheets are read, and the map number of the appropriate one is displayed on the display screen 42 in response to the input of the heading of movement by the user.

On completion of the operations for the No. 2 map sheet, the steps 310 - 318 are repeated for the No. 3 and No. 4 map sheets until scheduled course data for the destination G is inputted (step 320).

Accordingly, in starting the navigational operation by setting the No. 1 map sheet following the input of scheduled course data into the internal memory as explained above, even if the scheduled course runs in more than one map sheet, it is indicated in the form of line segments and arrows, and the user is accurately informed of the positional relation between the present location and the scheduled course.

The apparatus displays the map number of the map sheet to be set next when the present location approaches the border of the current map, automatically, enabling the user to replace the maps easily. After the map replacement, the scheduled course is moved automatically to the position of display screen corresponding to the new map.

It is of course possible, even in the case of a scheduled course running across more than one map sheet as explained above, to store the inputted scheduled course data in the storage medium and use the stored data for successive navigational operations.

Map sheets used in this embodiment can be provided by being packed in the casing or envelope attached to front or end of sight-seeing guidebooks or attached to pamphlets of hotels so that suitable information is offered.

For a map sheet attached to a guidebook, positional information (latitude and longitude) of typical destinations passage points within the map and described in the text may be coded and printed in the form of the bar code in a marginal space of the map sheet so that it can be used for the route guidance operated easily by the apparatus in the navigation mode.

Generally, guidebooks are edited for individual purposes, and therefore it is possible for each map sheet to include only certain destinations and set routes to the destinations from a nearby interchange of a highway as the starting point for example.

For this usage, by printing the latitudes and longitudes of the destination and passage points in the form of bar code in the marginal space of the map sheet 20, it is used with the map display apparatus as a navigation system so that the route to the destination is displayed on the display device 42 in the same manner as displaying a scheduled course explained previously, and the user is freed from seeking a route on a map owing to the easy use of the system.

In recording a route to a destination in the form of the bar code, by setting a road of less traffic congestion for example, it is possible for a user who is unfamiliar with the area to go smoothly to the destination.

In case a pamphlet 120 of a hotel, with a map sheet being enclosed in its attached casing 120A, as shown briefly in Fig. 40 is delivered to each user, a route from a highway interchange to the hotel or routes from the hotel to sight-seeing places are recorded in the form of bar code, and a map sheet that matches the article of hotel guide 120B can be prepared.

The map display apparatus of this embodiment has its display device 42 designed to open or close as shown in Fig. 30, and accordingly a map sheet can be set without touching the display device 42, and the display device 42 and map sheet 20 are prevented from being scarred. After the map sheet 20 has been set to the specified position, the display device 42 is closed so that it is in close contact with the map sheet 20, and the user can watch clear map information through the display screen 42.

According to this embodiment, the map sheet 20 is provided with the insertion marks 30C and 30D which are detected by the mark sensor 110, and the read operation time for the bar code 22 by the bar code reader 13B is controlled accurately based on the mark detection, whereby the power consumption of the apparatus can be saved.

The bar code zone of the map sheet may record two or more rows of bar codes. The literal information may be recorded in the form of OCR character or the like instead of the bar code.

According to this embodiment, the user can easily confirm on the display screen that the present location is right on the course on the way from the starting point to the destination.

### [Embodiment 9]

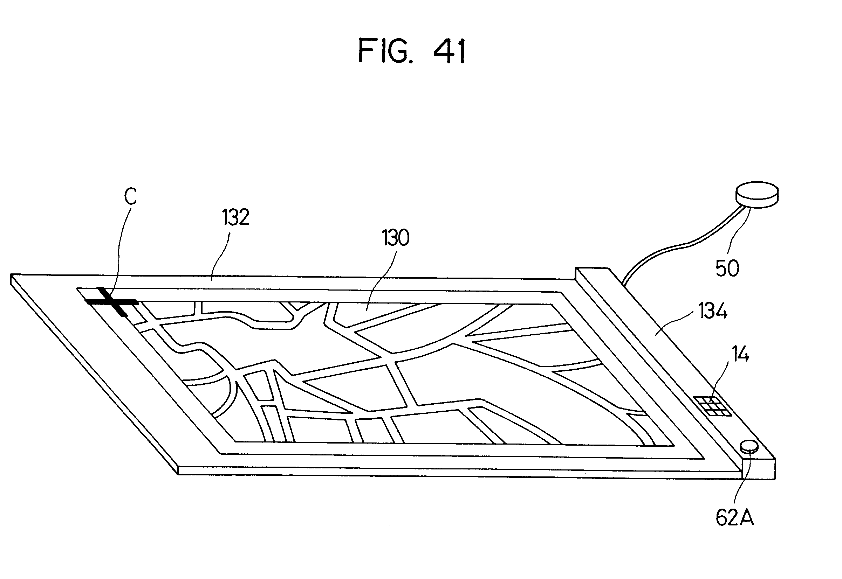

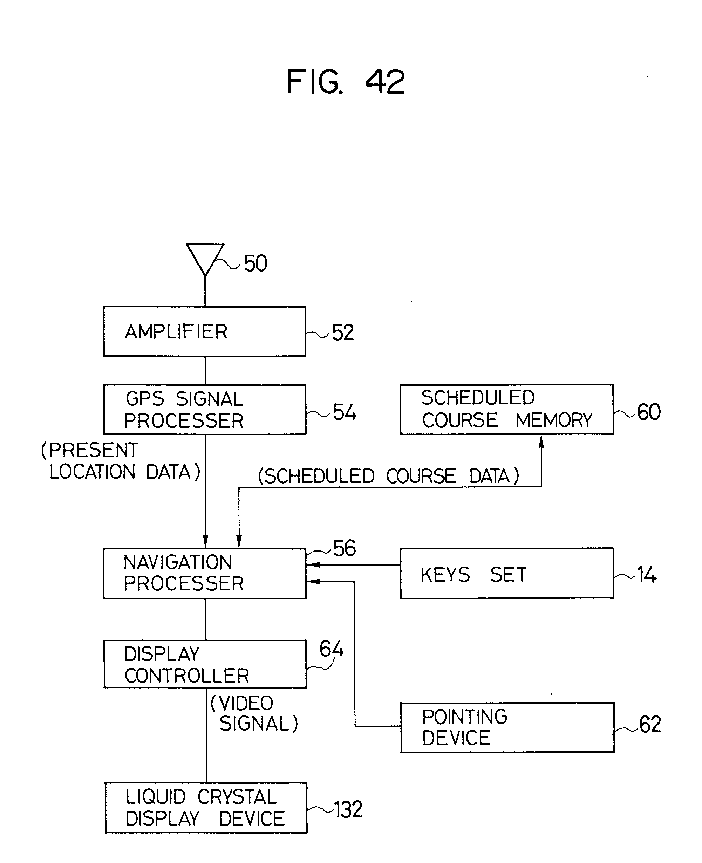

Fig. 41 is a brief perspective diagram showing the external view of the map display apparatus based on the ninth embodiment of this invention, and Fig. 42 is a block diagram showing the principal portions of the apparatus.

The map display apparatus of this embodiment includes a display device 132 which can display map information recorded on a map 130 that is overlaid on the screen and mark the present location with a cursor C positioned at the relevant position of the map 130, a GPS antenna 50 for receiving the GPS signal transmitted by the GPS satellite thereby to determine the present location to be marked on the display device 132, a key set 14 used to input various data pertinent to the reference positions and the like on the map 130, a trackball 62A used to move the cursor C to a reference point or the present location on the map, and a controller 134 that controls the apparatus to function as a navigation system in accordance with the received GPS signal and inputted data.

The display device 132 is a liquid crystal display device formed of a flexible liquid crystal film, which is described in detail in the article entitled "Polymer Dispersed Liquid Crystals for Display Application" written by J. W. Doane et al., Mol. Cryst. Liq. Cryst., Vol.1 65, 511, published in 1988.

The flexible display device 132 can fit not only to the map 130 of a flat map sheet but also to a non-flat map such as a map book or the like having curved surface.

The basic arrangement of the apparatus shown in Fig. 42 is substantially identical to the third embodiment shown in Fig. 21, except that the key set (data input keys) 14 can be used to input the reference points and scale factor of the map 130.

The navigation processor 34 has a function of calculating the correlation between the latitude and longitude on the map 130 and the coordinates on the display screen 132 based on the information provided by the key set 14, GPS signal processor 54, scheduled course memory 60 and pointing device 62, and delivering positional information including the present location and scheduled course to the display controller 64. The display controller 64 has a function of displaying and indicating the positional information based on the calculated correlation and the positional information over the map information of the map 130 that is displayed on the display device 132.

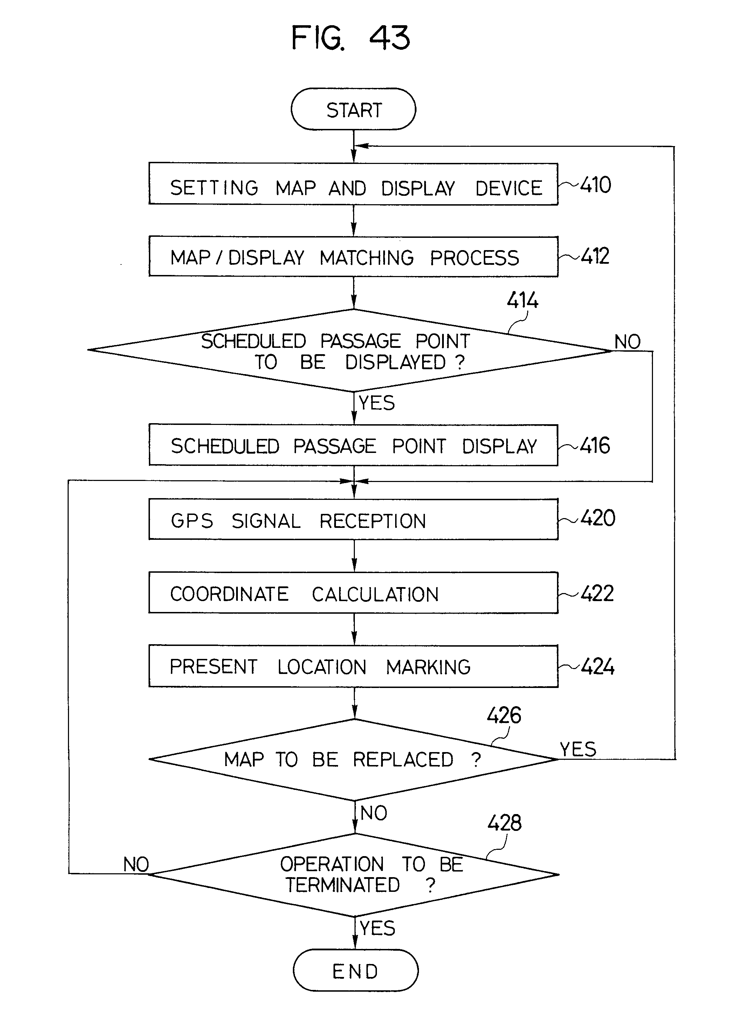

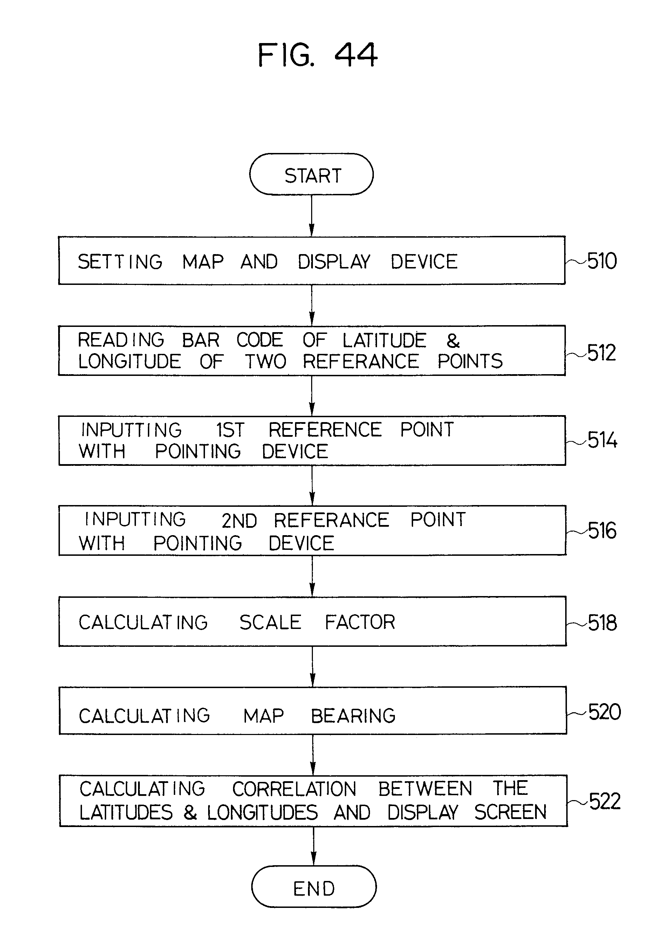

Next, the operation of this embodiment will be explained on the flowcharts of Fig. 43 and Fig. 44.

Initially, the user places the map 130 at the specified position on the display device 132 (step 410), and the apparatus calculates the correlation between the latitude and longitude on the map 130 and the coordinates on the display screen 132 thereby to establish a positional matching between them (step 412).

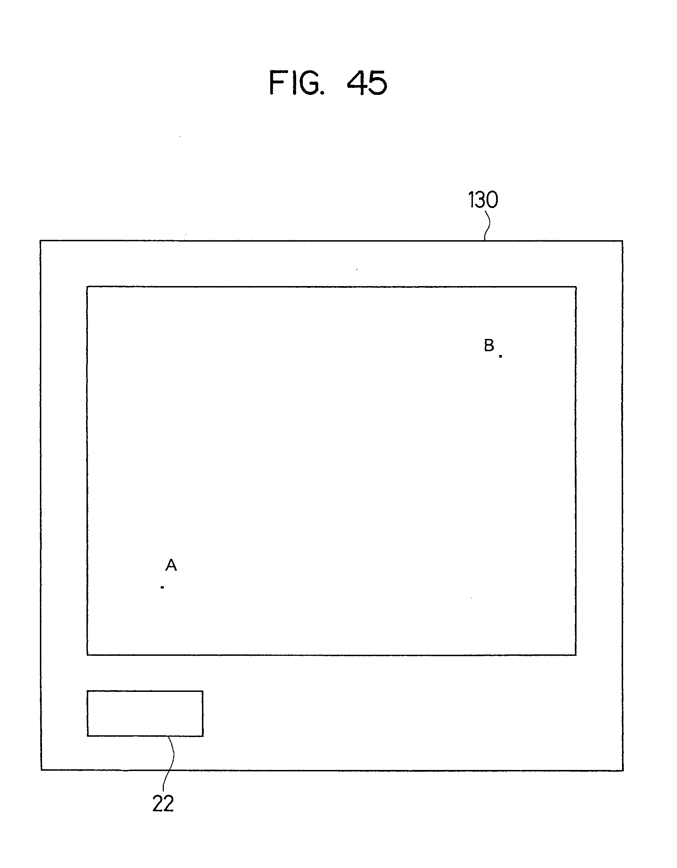

In this embodiment, the correlation is calculated between two reference points A and B on the map 130 and the latitudes and longitudes of these points recorded in the bar code zone. Maps used for this apparatus have printed reference points A and B and bar code information 22 printed in the marginal space in addition to map information such as roads and names of places as in ordinary maps, as shown in Fig. 45.

The matching process of the step 412 is implemented as shown in the flowchart of Fig. 44.

After the map 130 has been placed on the display device 132 in step 510 that is equivalent to step 410 in Fig. 43, the apparatus inputs the latitudes and longitudes of the two reference points A and B (step 512). This input operation is carried out by a bar code reader (not shown) by reading the bar code 22 printed on the map 130 that is placed on the display device 132.

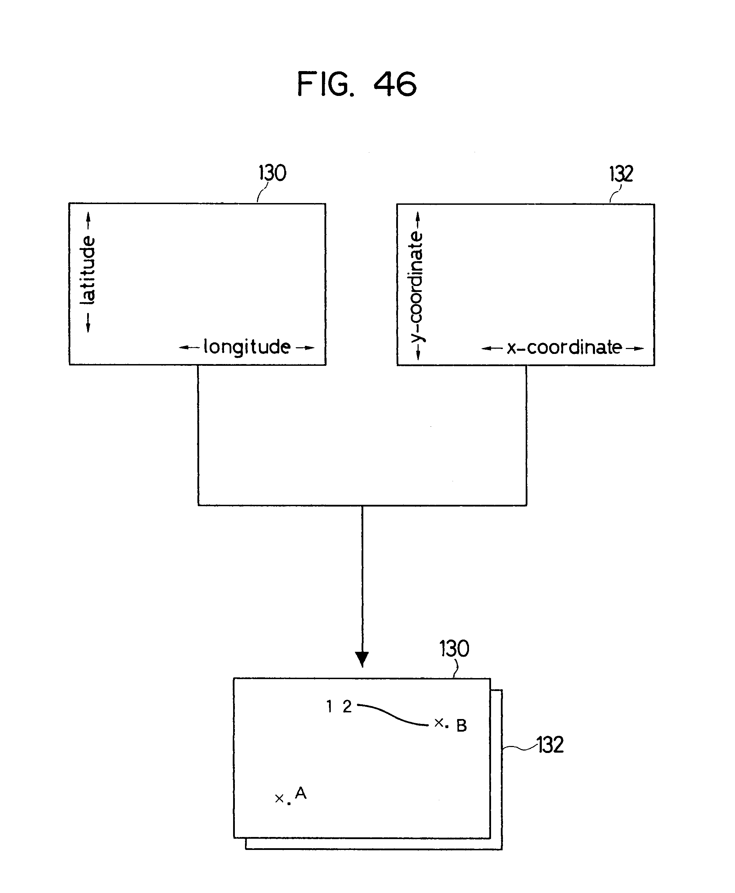

The user operates the pointing device 62 to move the cursor C to the position of display screen 132 that coincides with the first reference point A on the map 130 and inputs the reference position on the display screen 132 (step 514). The same operation takes place for the second reference point B of the display screen 130 (step 516). Fig. 46 illustrates the input of the reference positions explained above. Indicated by "x" in the figure is the cursor position.

Based on the x/y coordinates of the reference positions on the display screen 132 for the two reference points A and B, the scale factor and the bearing of the map 130 are calculated (steps 518 and 520). The correlation between the latitude and longitude on the map 130 and the coordinates on the display screen 132 is calculated based on the results of the steps 518 and 520 thereby to establish a positional matching between the map 130 and display screen 132 (step 522).

Following the above-mentioned matching process between the map 130 and display device 132, the user determines as to whether or not scheduled passage points are to be displayed (step 414). For displaying a passage point, the user operates the pointing device 62 to move the cursor C to that map position and inputs the scheduled passage point (step 416).

After the process of step 416 is completed or the process is skipped based on the judgment of step 414, the apparatus receives the GPS signal through the GPS antenna 50 (step 420), calculates the coordinates on the display screen 132 that corresponds to the present location (step 422), and moves the cursor C to the screen position of the calculated coordinates so that the present location is marked with a blinking cursor on the display screen 132 (step 424).

If the present location marked in the step 424 is near the border of the map in use, the user is prompted to replace the map (step 426), and the foregoing operations are repeated by returning to step 410. Otherwise, the operations of steps 420 - 426 are repeated to mark the present location at each time point as a function of navigation system of the map display apparatus until the apparatus is turned off (step 428).

According to this embodiment described above, the display device 132 is formed of a flexible film, and an ordinary map can be used for the map display apparatus as a navigation system by setting the map in close contact with the display screen 132.

The positional relation between the map 130 and the display device 132 should be matched accurately in order to display correct position on the display device 132. The apparatus calculate correlation between latitude and longitude of the map 130 and coordinate of the display screen 132 based on the calculation of the map scale factor and bearing from the two reference points A and B on the map 130 and the latitudes and longitudes of the points read from the bar code 22, whereby the map display apparatus can be used as an accurate navigation system.

In addition, this embodiment is capable of marking the present location on the map 130, enabling the user to find easily the present location on the map that is the most difficult task generally in using a road map.

### [Embodiment 10]

Next, the map display apparatus based on the tenth embodiment of this invention will be explained.

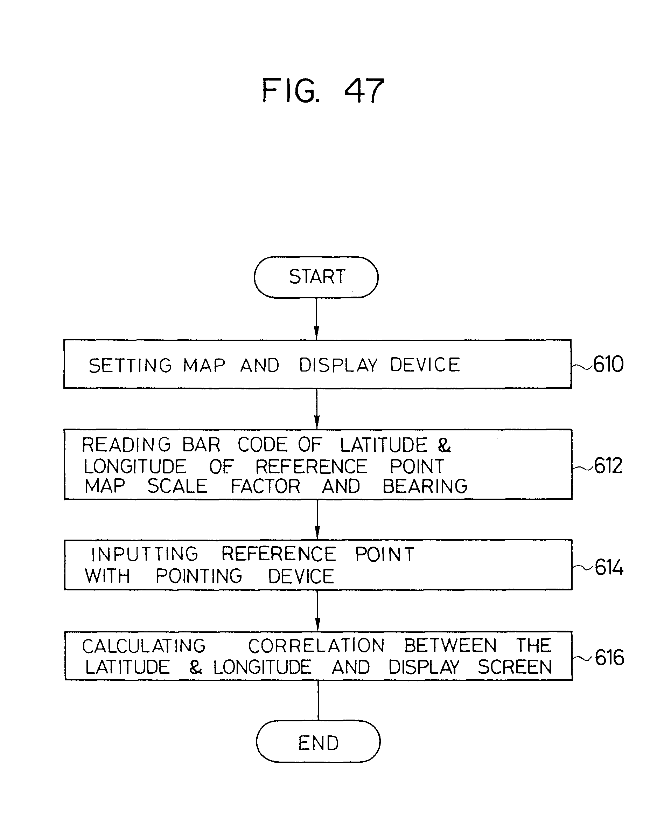

This embodiment is substantially identical to the previous ninth embodiment, except that the step 412 in the flowchart of Fig. 43 for the matching process between the map and display screen is carried out as shown in the flowchart of Fig. 47.

Initially, the user sets the map 130 on the display device 132 in step 610 that is equivalent to step 410 in Fig. 43, and the apparatus reads the bar code for inputting the latitude and longitude of a reference point printed on the map and the scale factor and bearing of the map (step 612). Subsequently, the user operates the pointing device 62 to input the position on the display screen 132 relevant to the reference point on the map 130 (step 614), and the apparatus calculates the correlation between the latitude and longitude on the map 130 and the coordinates on the display screen 132.

According to this embodiment, the matching process for the map 130 and display device 132 is implemented based on a single reference point on the map and the latitude and longitude of the reference point and the scale factor and bearing of the map read from the bar code 22, and the map display apparatus can be used as an accurate navigation system similar to the ninth embodiment.

### [Embodiment 11 ]

Next, the map display apparatus based on the eleventh embodiment of this invention will be explained.

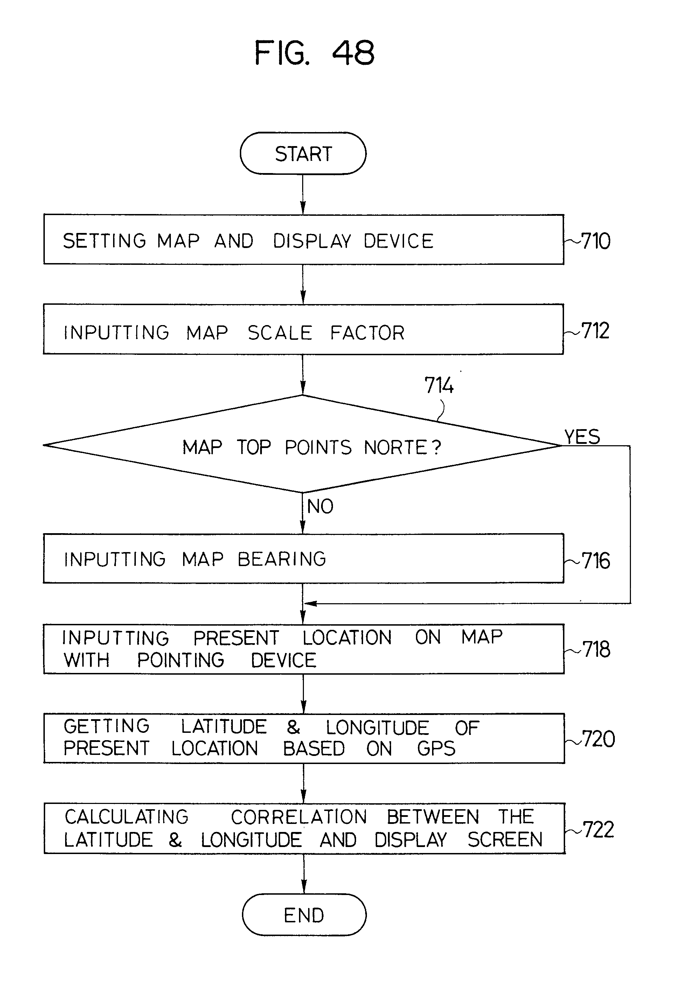

This embodiment is substantially identical to the previous ninth embodiment, except that the step 412 in the flowchart of Fig. 43 for the matching process between the map and display device is carried out as shown in the flowchart of Fig. 48.

Initially, the user sets the map 130 on the display device 132 in step 710 that is equivalent to the step 410 in Fig. 43, and inputs the scale factor of the map 130 on the key set 14 (step 712). The user examines that the top of the map 130 is the north direction (step 714), and in this case the user operates the pointing device 62 to input the present location on the map 130 to the display screen 132 (step 718). If the above judgment step 714 is negated, the user inputs the bearing of the map on the key set 14 (step 716), and the operational sequence proceeds to step 718.

Following the step 718, the GPS signal processor 54 evaluates the latitude and longitude of the present location based on the signal received through the GPS antenna 50 (step 720), and the apparatus uses the resulting data to calculate the correlation between the latitude and longitude on the map 130 and the coordinates on the display screen 132 (step 722).

According to this embodiment, the matching process for the map 130 and display device 132 is implemented based on the scale factor and bearing of the map 130 and the present location provided by the GPS satellite, and the map display apparatus can be used as a navigation system similar to the ninth embodiment.

### [Embodiment 12]

Next, the map display apparatus based on the twelfth embodiment of this invention will be explained.

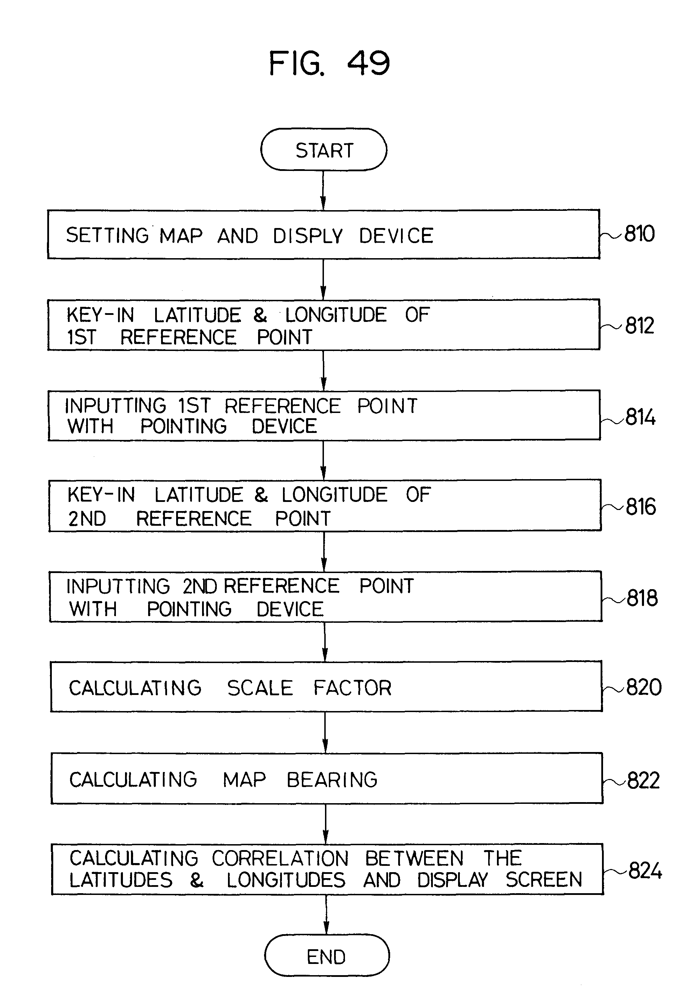

This embodiment is substantially identical to the previous ninth embodiment, except that the step 412 in the flowchart of Fig. 43 for the matching process between the map and display device is carried out as shown in the flowchart of Fig. 49.

This embodiment is another example of using two reference points on the map 130 common to the ninth embodiment.

Initially, the user sets the map 130 on the display device 132 in step 810 that is equivalent to the step 410 in Fig. 43, and inputs the latitude and longitude of the first reference point on the key set 14 (step 812). The user operates the pointing device 62 to move the cursor C to the position of display screen 132 that coincides with the reference point (step 814).

The same operation takes place for the second reference point (steps 816 and 818), and the apparatus calculates the scale factor and bearing of the map and the correlation between the latitude and longitude on the map and the coordinates on the display screen (steps 820, 822 and 824 that are equivalent to steps 518, 520 and 522 in Fig. 44).

According to this embodiment, the map display apparatus can be used as a navigation system similar to the ninth embodiment even if the latitudes and longitudes of the reference points are not recorded in the form of bar code on the map 130.

### [Embodiment 13]

Next, the map display apparatus based on the thirteenth embodiment of this invention will be explained.

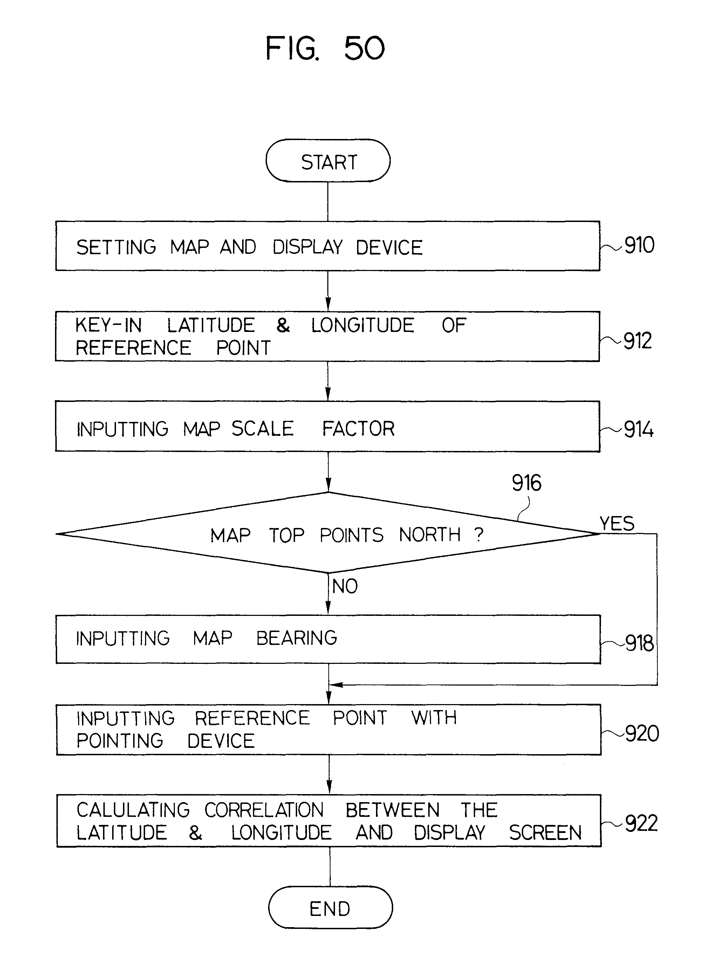

This embodiment is substantially identical to the previous ninth embodiment, except that the step 412 of the matching process in the flowchart of Fig. 43 is carried out as shown in the flowchart of Fig. 50.

This embodiment is another example of using one reference point on the map 130 common to the tenth embodiment.

Initially, the user sets the map 130 on the display device 132 in step 910 that is equivalent to the step 410 in Fig. 43, and inputs the latitude and longitude of the reference point and the map scale factor on the key set 14 (step 912). The user examines that the top of the map 130 points the north direction (step 916), and in this case the user operates the pointing device 62 to input the reference point (step 920 that is equivalent to steps 614 and 616 in Fig. 47). The apparatus calculates the correlation between the latitude and longitude on the map 130 and the coordinates on the display screen 132 (step 922). If the above judgment step 916 is negated, the user inputs the bearing of the map on the key set 14 in step 918, and the operational sequence proceeds to step 920.

According to this embodiment, the map display apparatus can be used as a navigation system similar to the ninth embodiment even if the latitude and longitude of the reference point, and the scale factor and bearing of the map are not recorded in the bar code zone 22 of the map 130.

Moreover, it is possible for the map display apparatus of this embodiment to be used as a navigation system by utilization of an ordinary road map book for displaying map information on the display screen.

Although it is possible in principle to calculate the correlation between the map and display device based on one or two reference points on the map, three or more reference points may be used.

For the recording of information in the form of bar code on the map 130, the content of record and the recording format may be standardized, and in this case many types of map display apparatus and maps are made compatible for the usage as navigation systems.

### [Embodiment 14]

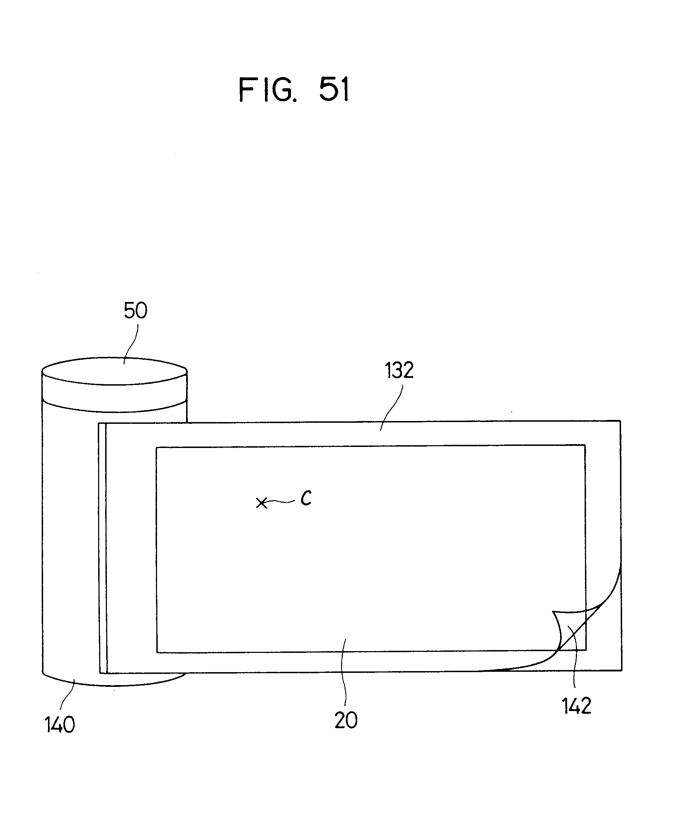

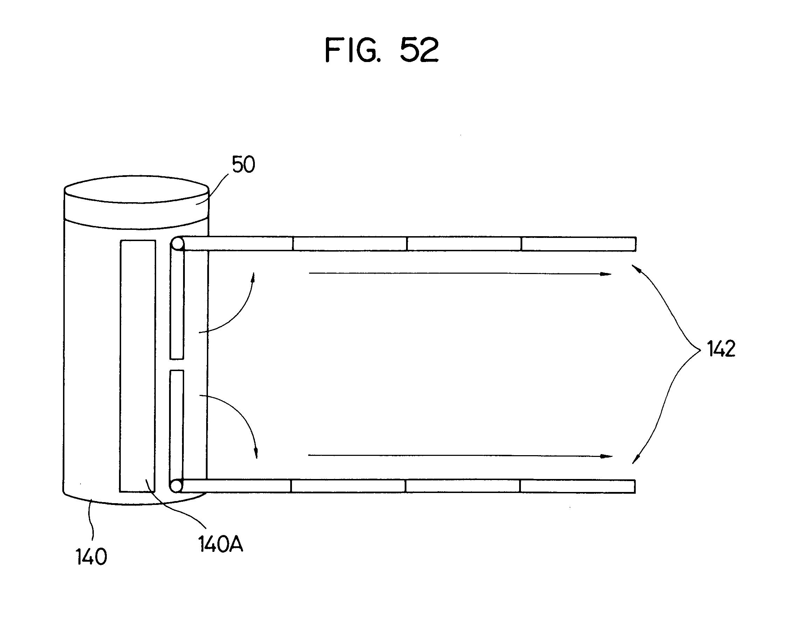

Fig. 51 is a brief plan view of the map display apparatus in a state of use based on the fourteenth embodiment of this invention, and Fig. 52 is a brief plan view of it, with the display device being not shown.

The map display apparatus of this embodiment includes a flexible liquid crystal display device 132 which can display map information recorded on a map sheet 20 that is overlaid on the screen and indicate positional information such as the present location at the relevant position on the map, a cylindrical case 140 which can accommodate the display device 132 when it is not used and release the display device when it is used, a GPS antenna 50 for receiving the GPS signal transmitted by the GPS satellite for locating the present user's position to be marked on the display screen 132, and a transparent cover film 142 that serves to fix the map sheet 20 in close contact with the display screen 132.

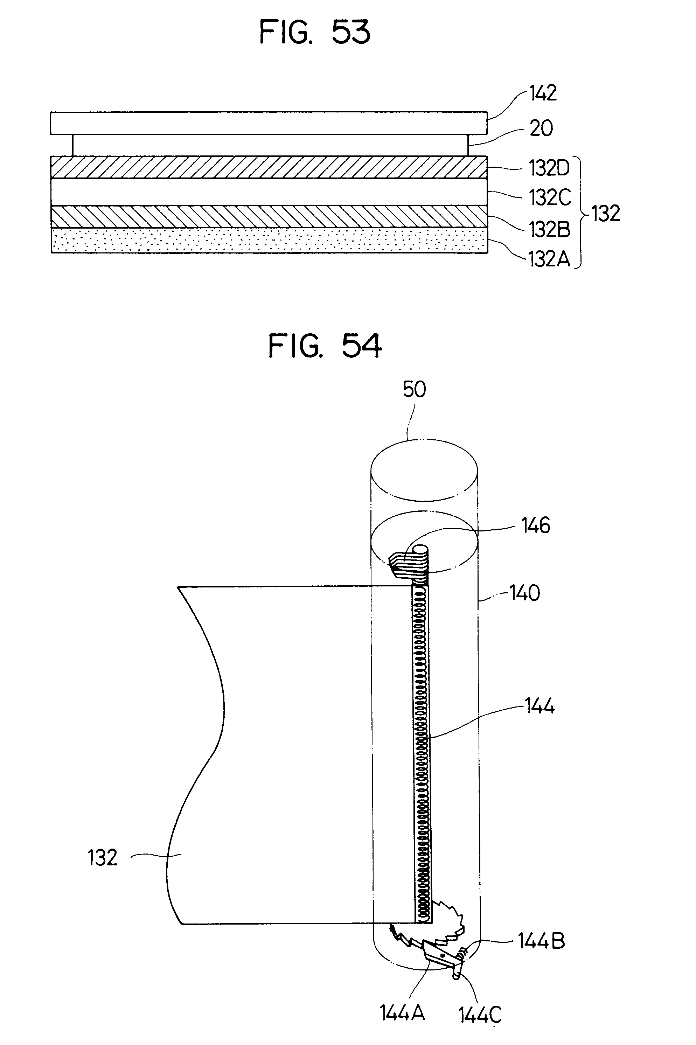

Fig. 53 is a brief cross-sectional diagram showing, in expanded fashion in the thickness direction, the display device 132, with the map sheet 20 and cover film 142 being overlaid thereon.

The flexible display device 132 consists of a dispersion film 132A, a polarization film 132B, a liquid crystal film 132C and a polarization film 132D, all laminated in this order. When the map display apparatus is used, the display device 132 is overlaid by the map sheet 20, which is covered by the cover film 142.

The map display apparatus of this embodiment includes a display support frame 142 made up of two bars for supporting the display device 132 that is drawn out of the display case 140 through a draw-out port 140A, as shown in Fig. 52. The support frame 142 has one end pivoted on the case 140 and can be folded at three joints of each bar so that it can be embedded in the case when the apparatus is not used. When the apparatus is used, the two bars are taken out and stretched as shown by the arrows in Fig. 52 to build the screen support frame 142.

The map display apparatus is provided with a wind mechanism for winding the display device 132 automatically into the cylindrical case 140, as shown for the principal portion in Fig. 54.

The display device 132 has its one end connected to a wind spring 144. When the apparatus is used, the display device 132 is drawn out for a certain length and held by means of a stopper 144A. For putting the display device 132 into the case, the user presses a release knob 144C against the force of a spring 144B to disengage the stopper 144A, and the display device 132 is wound automatically into the case 140 by the wind spring 144. Indicated by 146 are contacts of wiring of the display device.

The map display apparatus further includes a key set for inputting various data such as reference points on the map sheet 20 and a pointing device such as a trackball for moving the cursor C to indicate present position on the screen, and a controller inside the case 140 for controlling the apparatus to function as a navigation system, although these items are not shown in the Fig. 51 - Fig. 53.

The map sheet 20 used in this embodiment is a transparent film of polyester or the like on which map information is recorded by printing or the like. The transparent map sheet 20 is placed as shown in Fig. 53, and the present location or the like is marked on the display screen by means of a shutter device' included in the display device 132 by being positioned in correspondence to the map information on the map sheet 20 and by utilization of the dispersed light as a back-light from the dispersion film 132A.

The controller of this map display apparatus is basically the same as the ninth embodiment shown in Fig. 42, and its operation is identical to the twelfth embodiment shown in Fig. 43 and Fig. 49.

According to this embodiment described above, the display device 132 is formed of a flexible liquid crystal film, which can be wound into the cylindrical case 140 for the easy transportation of the apparatus when it is not used. Consequently, the user can bring the map display apparatus for the hiking and climbing and use it as a navigation system.

Although in this embodiment the map sheet 20 is a transparent film, it may be replaced with the reflective map sheet 40 having the cross-sectional structure shown in Fig. 19, or a semi-transparent film or a sheet of paper on which map information is printed.

In this case, the map sheet 40 is placed beneath the polarization film 132B, instead of the position for the fourteenth embodiment shown in Fig. 53, and the dispersion film 132A can be eliminated.

The cover film 142 is disposed at the position of the dispersion film 132A if it is eliminated.

The shape of the case 140 for accommodating the display device 132 and the arrangement of the screen winding and stopper mechanism are not confined to those of the foregoing embodiment.

The display device may be accommodated in a case by being folded, instead of being wound.

### [Embodiment 15]

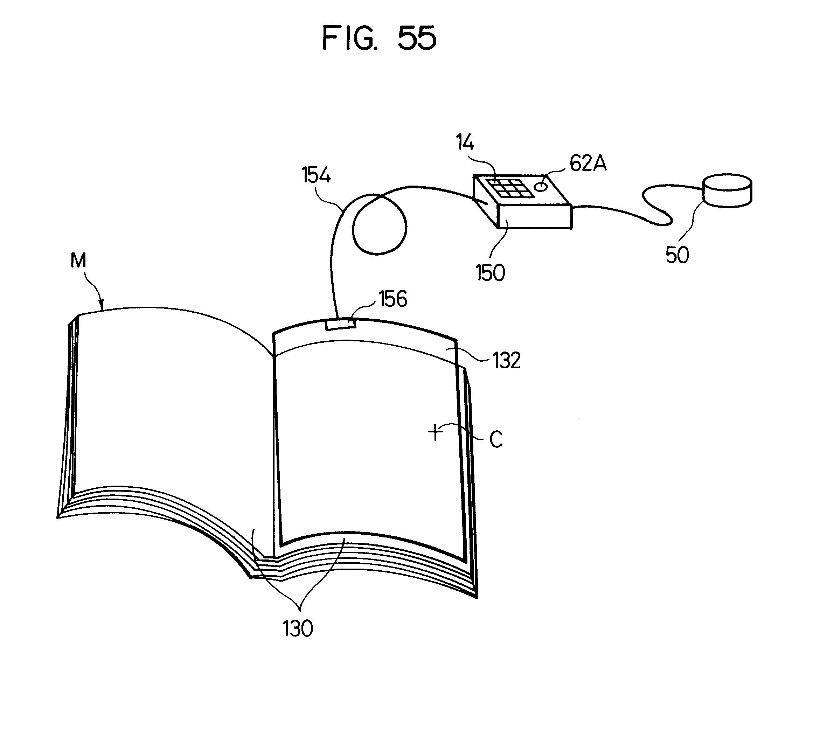

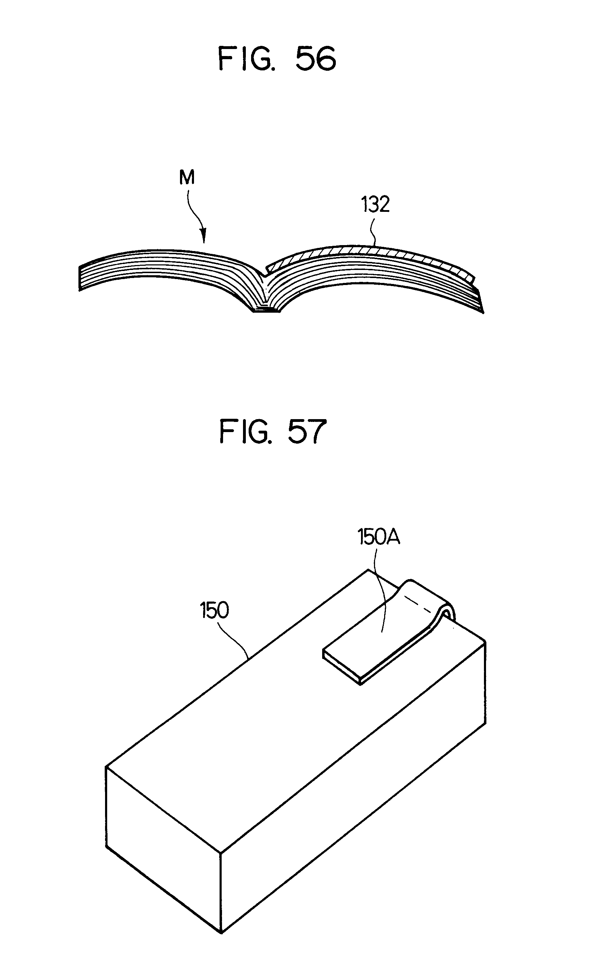

Fig. 55 is a brief plan view of the map display apparatus in a state of use based on the fifteenth embodiment of this invention, Fig. 56 is a brief elevation view of it, and Fig. 57 is a brief perspective diagram showing the back of the controller of the apparatus.

The map display apparatus of this embodiment includes a display device 132 overlaid on a map 130 on one side of an opened map book M for displaying map information included in the map and marking the present location with a cursor C at the relevant position on the map 130, a GPS antenna 50 for receiving the GPS signal transmitted by the GPS satellite thereby to determine the present location to be marked on the display screen 132, and a controller 150 that controls the apparatus to function as a navigation system in accordance with the received GPS signal and inputted data. The display device 132 is separated from the controller 150.

The controller 150 has a key set 14 used to input various data pertinent to the map 130, and a trackball (pointing device) 62A used to move the cursor C to a position on the display screen corresponding to the reference point or present location on the map.

The controller 150 is provided on its back with a hook device 150A as shown in Fig. 57, and the user can easily carry the controller 150 by putting the hook on the waist belt for example.

In this embodiment, the display device 132 is separated from the controller 150 as mentioned above, and both components are connected electrically through a cable 154. Indicated by 156 in Fig. 55 is an electrode provided on the display device 132 for connecting the cable 154.

The display device 132 is a liquid crystal display device formed of a flexible liquid crystal film.

The flexible display device 132 can fit even to a curved surface of a map book or the like. In addition, owing to the separate arrangement of the display device 132 and controller 150, the user can carry the display device by placing it between pages of a map book.

The overall arrangement of the map display apparatus of this embodiment is identical to the ninth embodiment shown in Fig. 42, with the amplifier 52, GPS signal processor 54, navigation processor 56, display controller 64, key set 14, scheduled course memory 60 and pointing device 62 being included in the controller 150.

In using the map display apparatus of this embodiment, the user first fully opens the map book M at the page of the intended map 130 and places the display device 132 at the specified position.

Next, the user operates the key set 14 to input the scale factor of the map 130 to the controller 150 so that a positional matching is established between the map 130 and the coordinate system of the display device 132. The user inputs the bearing of the map 130 unless the top of the map is the north.

The apparatus determines the present location based on the signal received by the GPS antenna 50 and marks the present location with the cursor C at the relevant position on the display screen 132.

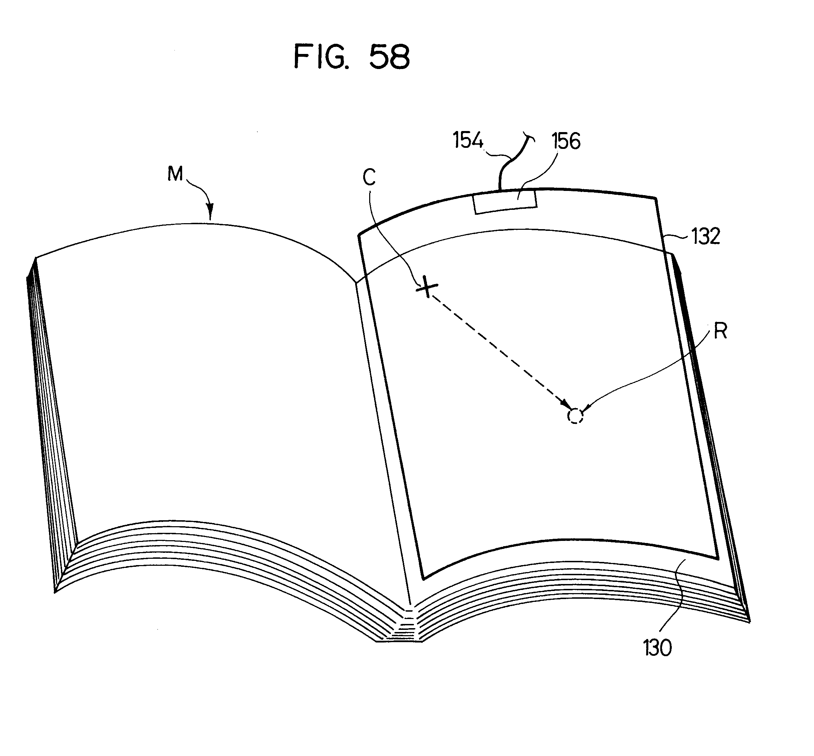

If the GPS-based present position marked with the cursor C on the display screen 132 deviates from the present location R on the map 130 as shown in Fig. 58, the user moves the cursor C to the position of the display screen over the present location R and inputs this position as a true present location on the display screen. This position adjustment can be done easily at the time of departure since the user knows the present location on the map.

In case the map 130 is replaced with another map of a different page due to some reason, such as that present location goes out of the map area, the user carries out the above-mentioned position matching operation between the GPS-based position and the present location on the new map.

On completion of the position matching operation between the GPS-based present location marked by the cursor C on the display screen 132 and the present location R on the map at the time of departure, the map display apparatus is ready to operate as a navigation system.

According to this embodiment, once the user sets the present location at the time of departure, the map display apparatus carried by the user marks the GPS-based present location with the cursor C on the display device 132 overlaid the map at each time point, enabling the user to confirm that the present location is right on the course on the way to the destination.

Once the present location is set at starting, the user can carry the display device 132 by placing it between certain pages of the closed map book M and open the map book M to confirm the present location whenever it is necessary.

Accordingly, the map display apparatus of this embodiment can be not only used for a vehicle navigation system, but brought for the hiking and climbing, and the user can operate it in the feel of simply using a map book.

The map display apparatus of this embodiment has the scheduled course display function, and the user can operate on the apparatus to display the scheduled course by bringing the cursor C to scheduled passage points on the map 130 with the pointing device 62 thereby to input the points. Accordingly, the map display apparatus of this embodiment has the ability of navigation.

According to this embodiment described above, the display device 132 is formed of a flexible liquid crystal film, allowing the use of an ordinary map book M, which is opened to place the display device 132 in close contact with a map 130 of a page. Consequently, it is possible for the map display apparatus to function as a navigation system that displays intelligible map information on the display screen without relying on a large memory capacity.

In addition, the display device 132 can be carried separately from the controller 150, enabling the user to carry the display device 132 by placing it between pages of a map book M and the controller 50 by putting it by means of the associated hook device on the user's waist belt or the like.

### [Embodiment 16]

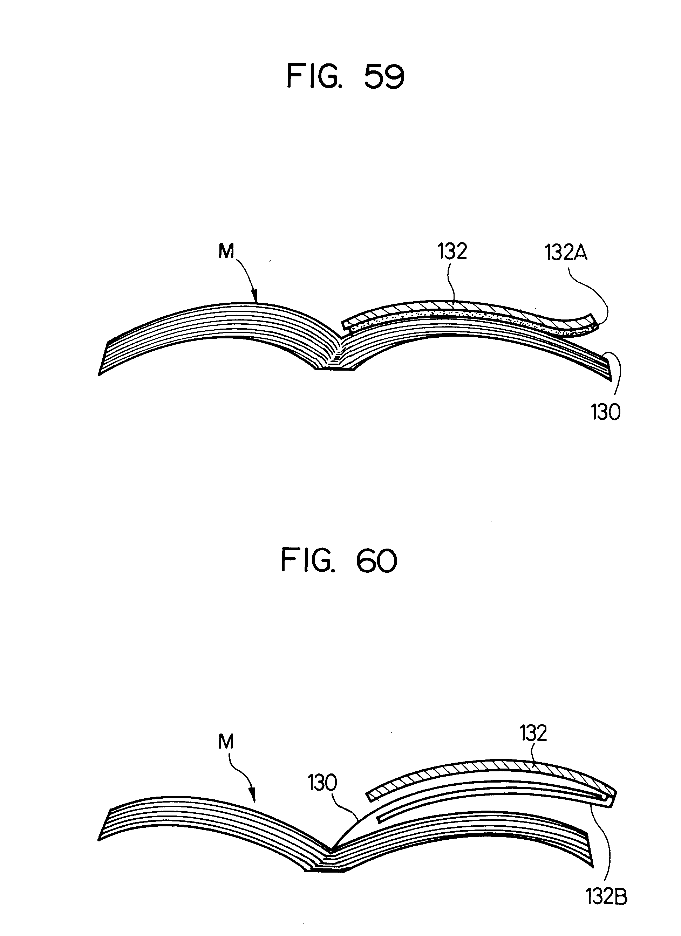

Fig. 59 is a brief elevation view of the map display apparatus based on the sixteenth embodiment of this invention.

The map display apparatus of this embodiment is substantially identical to the previous fifteenth embodiment, except that the display device 132 has the application of weak adhesive 132A on its entire rear surface.

According to this embodiment, it becomes possible for the user to fix the display device 132 on a map 130 by means of the adhesive 132A by simply placing the display device on the map in a proper positional relation.

The adhesive-based attachment of the display device 132 surely prevents it from being displaced with respect to the map 130 during the operation, and it becomes possible to indicate the GPS-based present location always accurately on the map 130.

This embodiment may be modified such that the weak adhesive 132A is applied on part of the rear surface, such as the circumferential portion, of the display device, instead of the entire rear surface.

In addition, a cover film may be put on the back of the display device 132 when the apparatus is not used in order to prevent the decay of the adhesive 132A due to dusts or the like.

### [Embodiment 17]

Fig. 60 is a brief elevation view of the map display apparatus based on the seventeenth embodiment of this invention.

The map display apparatus of this embodiment is substantially identical to the preceding fifteenth embodiment, except that the display device 132 is provided on its rear surface with a sheet material (plastic sheet) 132B that is bonded on one edge (right extreme in the figure) and the top or bottom edge to the corresponding portions of the display device 132 to form a casing in unison with it.

In this embodiment, the user puts a map page into the casing formed between the display device 132 and plastic sheet 132B through the opening (left extreme in the figure) up to the end, and consequently the display device 132 can be positioned automatically on the map 130.

### [Embodiment 18]

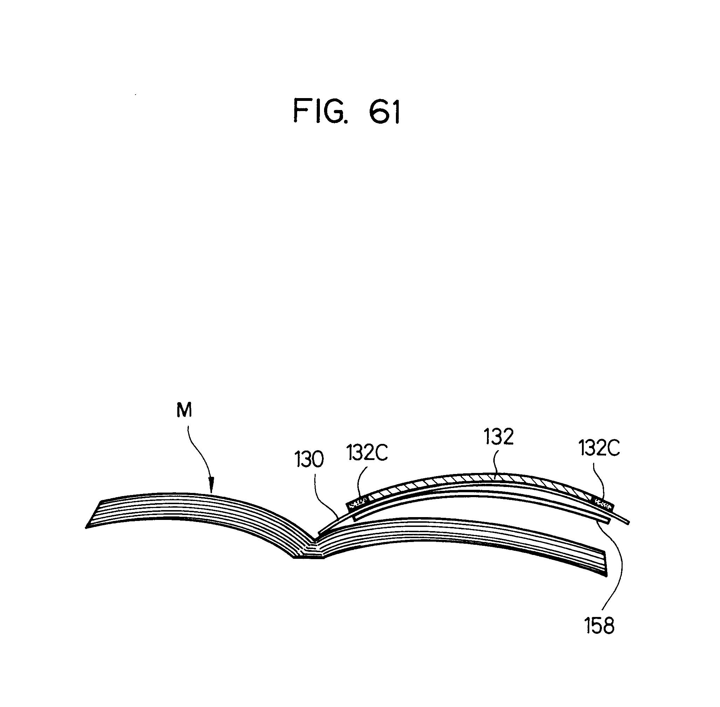

Fig. 61 is a brief elevation view of the map display apparatus based on the eighteenth embodiment of this invention.

The map display apparatus of this embodiment is substantially identical to the preceding fifteenth embodiment, except that the display device 132 is provided on its circumferential section with a thin magnet frame 132C.

The magnet frame 132C is formed of plastics, rubber or metal mixed with magnet dusts or the like.

A thin steel sheet (magnetic sheet) 158 is placed behind the map page of the map book M so that the display device 132 is fixed to the map page by being attracted magnetically.

According to this embodiment, it becomes possible for the user to position and fix the display device 132 on the map 130 by utilization of the magnetic force acting between the magnet frame 132C and steel sheet 158.

This embodiment may be modified to use other magnetic metal sheet or a plastic sheet mixed with magnetic dusts, instead of the steel sheet, provided in combination with the magnet frame.

### [Embodiment 19]

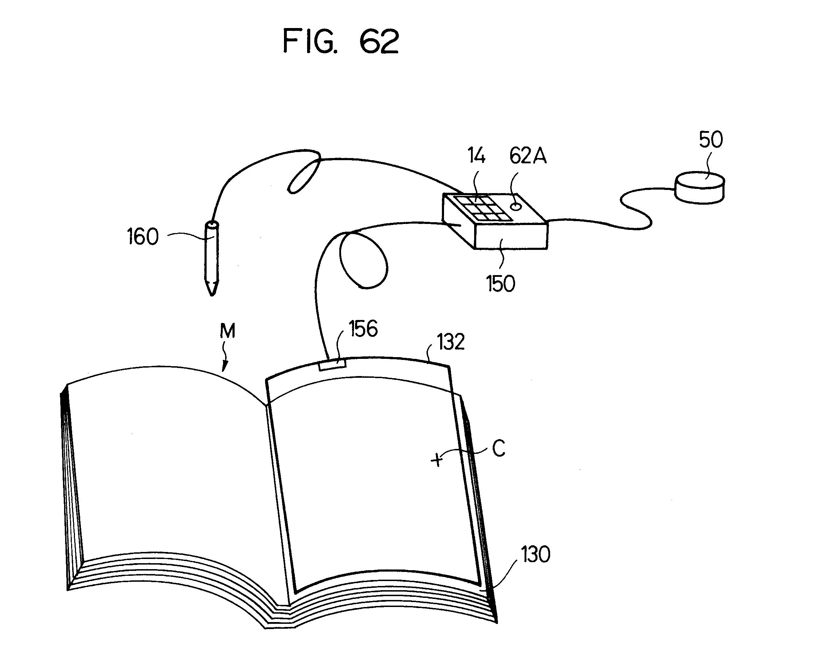

Fig. 62 is a brief perspective diagram of the map display apparatus based on the nineteenth embodiment of this invention.

The map display apparatus of this embodiment is substantially identical to the fifteenth embodiment except for the provision of a pen-type (hand-held) bar code reader 160 that is connected to the controller 150.

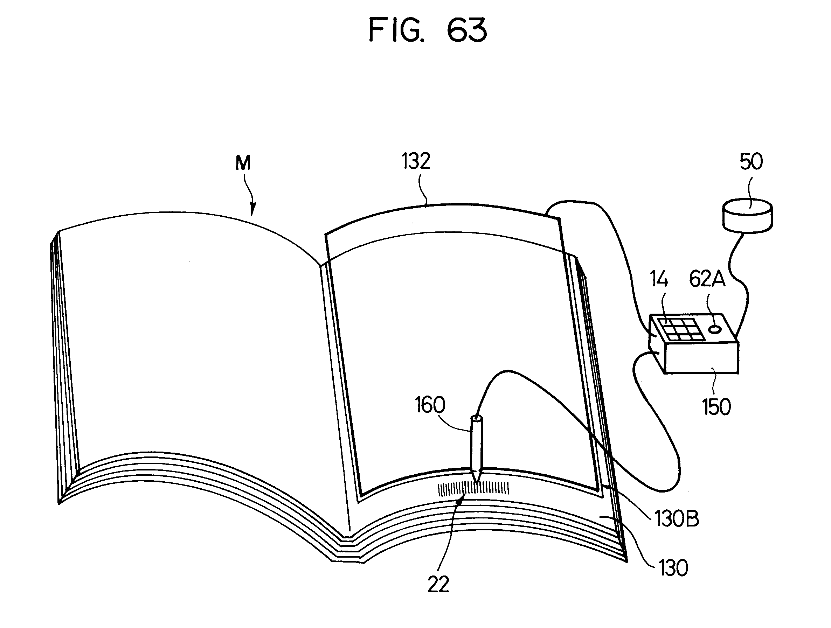

The apparatus can use a map 130 on which the latitudes and longitudes of positions on the map and the scale factor of the map are recorded in the form of bar code 22 as shown in Fig. 63.

The user operates the bar code reader 160 to read the bar code data 22 and places the display device 132 on the map 130 so that it coincides with the positioning guide lines 130B drawn on the map, and the navigation processor 56 of the apparatus calculates the correlation between the latitudes and longitudes on the map 130 and the coordinates on the display screen 132 thereby to implement the positional matching between them. Consequently, it is possible for the apparatus to mark the GPS-based present location with the cursor C accurately on the relevant position on the map 130.

Owing to the hand-held bar code reader 160 of this embodiment, bar code data 22 recorded in any place of the map can be read easily, and this pen-type bar code reader can also be used as a pointing device.

The display device 132 of this embodiment may be arranged identically to any of the preceding sixteenth to eighteenth embodiments so that it can be positioned and fixed on the map 130 easily and surely.

The hand-held bar code reader is not confined to the pen-type one described above.

According to this embodiment, it is possible for the map display apparatus to be used as a navigation system by utilization of an ordinary road map book for displaying map information on the display screen and the user can carry the display device by placing it between pages of the map book.

Although in this embodiment a display device of flexible liquid crystal film is used, it is also possible to use a liquid crystal display device of a glass plate with a map book having a marginal section between confronting pages or binding pages by means of a spiral binder for example so that the map page can be made flat.

An alternative manner of fixing the display device 132 to the map 130, besides the foregoing embodiments, is providing a chargeable material in the circumferential section of the display screen and charging it electrostatically so that the display device 132 is fixed to the map 130 based on the electrostatic force acting between them.

Although the present invention have been described specifically, the invention is not confined to the foregoing embodiments, but various modifications are possible within the scope of the invention.

## Claims

1. A map display apparatus (10) operating with a printed map means (20, 40, 72, 80, 130), said apparatus comprising:
locating means (12) for detecting the present position of said apparatus and producing positional information;
map information display means (16) for displaying a map based on said map means (20, 40, 72, 80, 130) and indicating a position; and display control means (11) for indicating the present location on said map information display means (16) based on the positional information produced by said locating means (12).

2. A map display apparatus according to claim 1 further including:
an information recording medium (22, 24, 26, 28) for recording information pertinent to the displayed map; and
information reading means (13B) for reading information out of said information recording medium.

3. A map display apparatus according to claim 2, wherein said information recording medium (22, 24, 26, 28) is disposed on said map means (20).

4. A map display apparatus according to claim 2 further including:
information writing means (13A) for writing, on said information recording medium (26), at least one destination or a route to the destination corresponding to the displayed map; and display control means (11) for displaying information about the deviation of the present location detected by said locating means (12) from the destination or route read out of said information recording medium (26).

5. A map display apparatus according to claim 1, wherein map information display means comprises a liquid crystal display device (42, 132) having a shutter device (16B), the present location being indicated on said liquid crystal display device (42, 132) by means of said shutter device based on the positional information.

6. A map display apparatus according to claim 5 further including:
a transparent map sheet (20) that is a transparent base material on which a map is printed, said map sheet (20) being placed behind said liquid crystal display device (42);
a detachable semi-transparent reflection plate (68B) disposed behind said transparent map sheet (20); and
illumination means (70) for illuminating said semi-transparent reflection plate (68B) from the rear thereof.

7. A map display apparatus according to claim 5 further including:
a transparent map sheet (20) that is a transparent base material on which a map is printed, said map sheet (20) being placed behind said liquid crystal display device (42); and
a detachable reflection plate (68A) disposed behind said transparent map sheet (20).

8. A map display apparatus according to claim 5 further including:
a map sheet (72) that is a sheet of paper or an opaque base material on which a map is printed, said map sheet (72) being placed behind said liquid crystal display device (42); and illumination means (74) for illuminating said map sheet (72) from the front thereof.

9. A map display apparatus according to claim 8, wherein the map (40D) is printed on the reflective surface (40B) of said paper or opaque base material.

10. A map display apparatus according to claim 5 further including:
a film map (80, 100) that is a transparent base
material on which a map is printed, said film map (80, 100) being placed to confront said liquid crystal display device (42);
a projection means (86) for projecting, in overlap fashion, positional information displayed on said liquid crystal display device (42) and map information (80A) printed on said film map (80, 100); and
a hologram (84) that functions to focus, in the space, the positional information (80B) and the map information projected by said projection means (86).

11. A map display apparatus according to claim 10, wherein said film map (80) is formed of a sheet, and wherein said apparatus further includes:
moving means (98) for moving said film map (80) in two-dimensional directions.

12. A map display apparatus according to claim 10, wherein said film map (100) has an elongated shape, and wherein said apparatus further includes:
moving means (106) for moving said film map (100) in its longitudinal direction; and
film supply and take-up means (104A, 104B) for releasing and winding said film map (100) in response to the movement of said film map (100).

13. A map display apparatus according to claim 1 further including:
means (14B) of inputting a departure point (S), destination (G) and one or more scheduled passage points (P1, P2) between the departure point (S) and destination (G) at relevant positions on said map display means (42); and means of displaying a line segment that connect adjacent ones of said points and indicating the heading of movement (R) on the point on said map display means (42).

14. A map display apparatus according to claim 13 further including:
means of calculating, in response to the arrival of the present location at a scheduled passage point on said map display means (42), the distance from the point of arrival to the next scheduled passage point or to the destination (G); and
means of displaying the calculated distance between the two points.

15. A map display apparatus according to claim 5, wherein said liquid crystal display device (132) is designed to be overlaid on said map means (130), and wherein said apparatus further includes:
correlation calculation means for calculating the correlation between the latitude and longitude on the map (130) and the coordinates on the liquid crystal display device (132), while said display device (132) is being overlaid on said map means (130).

16. A map display apparatus according to claim 15, wherein said correlation calculation means includes a function of calculating the correlation between the latitude and longitude on the map (130) and the coordinates on the liquid crystal display device (132) based on the latitudes and longitudes of two reference points on the map (130).

17. A map display apparatus according to claim 15, wherein said correlation calculation means includes a function of calculating the correlation between the latitude and longitude on a map (130) and the coordinates on the liquid crystal display device (132) based on the latitude and longitude of one reference point on the map (130), the scale factor of the map (130) and the bearing of the map (130).

18. A map display apparatus according to claim 15, wherein said correlation calculation means includes a function of calculating the correlation between the latitude and longitude on the map (130) and the coordinates on the liquid crystal display device (132) based on the latitude and longitude of the present location detected by said locating means, the scale factor of the map (130) and the bearing of the map (130).

19. A map display apparatus according to claim 15, wherein said liquid crystal display device (132) is formed of a flexible material, and wherein said apparatus further includes: casing means (140) for accommodating and drawing out said liquid crystal display device (132).

20. A map display apparatus according to claim 19, wherein said casing means (140) includes means (144B) of winding said liquid crystal display device (132).

21. A map display apparatus according to claim 19, wherein said casing means (140) includes support means (142) for holding said liquid crystal display device (132) that has been drawn out of said casing means (140).

22. A map display apparatus according to claim 15, wherein said locating means and display control means are assembled as a control unit (150) that is separated from said liquid crystal display device (132).

23. A map display apparatus according to claim 22, wherein said control unit (150) is connected with a hand-held bar code reader (160).

24. A map display apparatus according to claim 22, wherein said control unit (150) is provided with a hook means (150A) for attaching said control unit (150) to an external support means.

25. A map display apparatus according to claim 22, wherein weak adhesive (132A) is applied on entire or partial rear surface of said liquid crystal display device (132) so as to fix said device (132) on a map (130).

26. A map display apparatus according to claim 22, wherein a sheet member (132B) is disposed at back of said liquid crystal display device (132) so as to form a casing between them.

27. A map display apparatus according to claim 22, wherein a magnet (132C) is provided at least partial surface of said liquid crystal display device (132).

28. A map sheet (20) comprising:
a base material on which a map information (21) is printed; and
a digital information recording means (22, 24, 26, 28) for recording map-related information.

29. A map sheet according to claim 28, wherein said digital information recording means is in form of a bar code (22), two-dimentional bar codes (24) or micro bar codes.

30. A map sheet according to claim 28, wherein said digital information recording means is formed of an IC memory chip (26) or an optical storage medium (28).
